# EUROPEAN PATENT APPLICATION

(11) **EP 4 734 036 A1**
(43) Date of publication of application: **29.04.2026**
(21) Application number: 24845618.8
(22) Date of filing: 23.07.2024
(51) Int. Cl.: G06Q 50/06

(54) **POWER PLAN CREATION SYSTEM**

(30) Priority: 24.07.2023 JP 2023119615
(71) Applicant: Sustech Inc., Tokyo 105-0014 (JP)
(72) Inventor: TANNO, Yusuke, Tokyo 105-0014 (JP); OHASHI, Akifumi, Tokyo 105-0014 (JP)
(74) Representative: RGTH
(86) International application number: PCT/JP2024/026320
(87) International publication number: WO 2025/023243

(57) **Abstract**

The present invention reduces labor for creating a power plan by a user and improves profitability by a power plan creation system for automating creation and modification of a power generation plan, a power sales plan, and other plans on the basis of a preset condition according to change in circumstances such as change in weather, influence of current event information, fluctuation in imbalance charges, and power plant outages.

A power operation system according to the present invention comprises: a type selection unit that selects one of a plurality of power generation output prediction types; a plan creation unit that creates a power generation plan and/or power sales plan on the basis of a power generation output prediction value corresponding to the selected power generation output prediction type; a determination control unit that determines whether the power generation plan and/or power sales plan satisfies a predetermined condition, and outputs change instruction information for manually or automatically changing the created power generation plan and/or power sales plan if the power generation plan and/or power sales plan is determined to satisfy the predetermined condition; and a plan change unit that receives the change instruction information and changes the power generation plan and/or power sales plan.

## Description

### TECHNICAL FIELD

The present invention relates to an electric power plan creation system.

### BACKGROUND ART

Conventionally, in power generation methods susceptible to weather conditions, such as solar power generation and wind electric power generation, attempts have been made to buy and sell electric power in accordance with fluctuations in generated power for each time period.

Patent Document 1 discloses a power management system that creates an electric power generation plan based on individual demand information on the demand side and weather information used to create power demand forecast data. The system also creates a bidding plan based on the electric power generation plan and an assumed exchange price concerning bidding conditions and settlement prices at a power exchange.

### Citation List

### Patent Document

Patent Document 1: Japanese Unexamined Patent Application, Publication No. 2019-303411

### DISCLOSURE OF THE INVENTION

### Problems to be Solved by the Invention

Under the Electricity Business Act and the terms and conditions for wheeling service , each electric power producer or electric power generation contractor (a person entrusted by an electric power producer with power operation management) must, by 12:00 noon on the day before a power delivery date, submit to the Organization for Cross-Regional Coordination of Transmission Operators (OCCTO) a next-day plan , prepared in 48 frames at 30-minute intervals, such as an electric power generation sales plan and a demand procurement plan. This imposes a heavy burden on plan preparation. Furthermore, plans are required to be submitted on a daily, weekly, monthly, and yearly basis, and, even after submission, in order to respond to information on power supply and demand that varies from moment to moment (for example, weather changes, fluctuations in imbalance fee, and stoppage of an electric power generation facility), a submitted plan is required to be modified. For bids for buying and selling electric power on the Japan Electric Power Exchange (JEPX), in an Electric Power Reserve Exchange , and in a capacity market, a heavy burden is imposed on a business operator, including selection of an optimal bidding market for each 30-minute frame, and decisions regarding bidding conditions, bidding timing, bidding quantities, and bidding methods. The invention disclosed in Patent Document 1 creates an electric power generation plan and a bidding plan, but does not automate creation and modification of the electric power generation plan and the bidding plan.

The present invention has been made in view of such circumstances, and provides an electric power plan creation system (hereinafter, the present plan creation system) that, in response to changes in circumstances such as weather changes, influence of current affairs information, fluctuations in imbalance fee, and stoppage of an electric power generation facility, can automate creation and revision of an electric power generation plan, an electric power sales plan, and other plans, based on pre-set conditions.

### Means for Solving the Problems

In order to achieve the above object, according to one embodiment of the present invention, there is provided an electric power plan creation system, including:
a type selection unit configured to select one of a plurality of electric power generation amount prediction types;
a plan creation unit configured to create an electric power generation plan and/or an electric power sales plan, based on an electric power generation amount prediction value corresponding to the selected electric power generation amount prediction type;
a determination control unit configured to determine whether prescribed conditions are satisfied by the electric power generation plan and/or the electric power sales plan, and to output modification instruction information for manual or automatic modification of the created electric power generation plan and/or the created electric power sales plan in a case where the prescribed conditions are determined to be satisfied by the electric power generation plan and/or the electric power sales plan; and
a plan modification unit configured to receive the modification instruction information, and to modify the electric power generation plan and/or the electric power sales plan.

According to the present invention, by sequentially updating an electric power generation plan and/or an electric power sales plan, based on latest information related to power supply and demand, revenue of an electric power producer or electric power generation contractor can be maximized, and a risk of imbalance occurrence can be minimized.

According to one embodiment of the present invention, the electric power plan creation system is provided, in which the plurality of electric power generation amount prediction types include a value calculated based on a maximum value, a minimum value, and/or an average of electric power generation amount prediction values, or a value calculated based on past actual electric power generation amount data.

According to the present invention, a plurality of options are provided for electric power generation amount prediction values used for an electric power generation plan and/or an electric power sales plan, whereby a plan can be created by using a prediction value that is best suited to a user's business policy.

According to one embodiment of the present invention, the electric power plan system is provided, in which the prescribed conditions include at least one selected from the following i) to iv):
i) an extent of variation, of an electric power generation amount prediction value calculated or acquired after creation of the electric power generation plan and/or the electric power sales plan, relative to an electric power generation amount prediction value calculated or acquired at a time of creating the electric power generation plan or the electric power sales plan, exceeds a pre-set threshold;
ii) a change in an operation status of an electric power generation facility that occurs after creation of the electric power generation plan and/or the electric power sales plan corresponds to a pre-defined change;
iii) a change in wide-area reserve ratio information corresponds to a pre-defined change; or
iv) an extent of variation, of an electric power trading price in a market, relative to the electric power trading price prediction value in the market that is calculated or acquired at a time of creating the electric power generation plan and/or the electric power sales plan, exceeds a pre-set threshold.

According to the present invention, in a case where an event occurs that may greatly affect a user's revenue, an electric power generation plan and/or an electric power sales plan can be modified, thereby preventing a loss to the user.

According to one embodiment of the present invention, the electric power plan system is provided, further including an acquisition unit configured to acquire information including an electric power generation amount prediction value corresponding to the selected electric power generation amount prediction type, in which the plan creation unit creates the electric power generation plan and/or the electric power sales plan, based on the electric power generation amount prediction value that the acquisition unit has acquired.

According to the present invention, an electric power generation plan and/or an electric power sales plan can be created by using electric power generation amount prediction values acquired from an institution outside the electric power plan system of the present invention.

According to one embodiment of the present invention, the electric power plan system is provided, further including an electric power generation amount first prediction unit configured to calculate an electric power generation amount prediction value by using a learned model trained with past electric power generation amount prediction values and actual electric power generation amount data as training data,
wherein the plan creation unit creates the electric power generation plan and/or the electric power sales plan, based on the electric power generation amount prediction value calculated by the electric power generation amount first prediction unit.

According to the present invention, by means of a learned model using past actual electric power generation amount data as training data, an electric power generation plan and/or an electric power sales plan can be created, based on more accurate electric power generation amount prediction values.

According to one embodiment of the present invention, the electric power plan system is provided, further including: an acquisition unit configured to periodically acquire information including weather forecast data and actual electric power generation amount data from an electric power generation facility;
a storage device configured to store information including actual electric power generation amount data, electric power generation capacity, and an installation location of the electric power generation facility; and
an electric power generation amount second prediction unit configured to calculate an electric power generation amount prediction value, based on at least the latest weather forecast data and information including the actual electric power generation amount, the electric power generation capacity, and the installation location of the electric power generation facility,
in which the plan creation unit creates the electric power generation plan and/or the electric power sales plan, based on the electric power generation amount prediction value calculated by the electric power generation amount second prediction unit.

According to the present invention, an electric power generation plan and/or an electric power sales plan can be created, based on accurate electric power generation amount prediction values, for an electric power generation facility that uses renewable energy, such as solar or wind power generation.

According to one embodiment of the present invention, the electric power plan system is provided, in which the plan creation unit creates the electric power generation plan and/or the electric power sales plan, based on information including the electric power generation amount prediction value, a future electric power trading price prediction value in an electric power trading market, and a future imbalance fee prediction value.

According to the present invention, an electric power sales plan can be created that responds to fluctuations in an electric power trading price, thereby improving a user's revenue.

According to one embodiment of the present invention, the electric power plan system is provided, further including:
an electric power trading price prediction value acquisition unit configured to acquire a future electric power trading price prediction value; and
an imbalance fee prediction value acquisition unit configured to acquire a future imbalance fee prediction value,
in which the plan creation unit creates the electric power generation plan and/or the electric power sales plan, based on information including the electric power generation amount prediction value, the acquired electric power trading price prediction value, and an acquired imbalance fee prediction value.

According to the present invention, by acquiring and using future electric power generation amount prediction values, electric power trading price prediction values, and acquired imbalance fee prediction values, an electric power generation plan and/or an electric power sales plan can be created that improves a user's revenue.

According to one embodiment of the present invention, the electric power plan system is provided, further including:
an electric power trading price prediction unit configured to calculate a future electric power trading price prediction value; and
an imbalance fee prediction unit configured to calculate an imbalance fee prediction value,
in which the plan creation unit creates an electric power generation plan or an electric power sales plan, based on the electric power generation amount prediction value, the calculated electric power trading price prediction value, and the calculated imbalance fee prediction value.

According to the present invention, by calculating, within the system, future electric power generation amount prediction values and electric power trading price prediction values, and by using acquired imbalance fee prediction values, an electric power generation plan and/or an electric power sales plan can be created that improves a user's revenue.

According to one embodiment of the present invention, an electric power plan system is provided, in which the plan modification unit is configured to acquire information on the latest electric power generation plan and/or the latest electric power sales plan that the plan creation unit has created.

According to the present invention, even after a plan has been created, a new plan, based on the latest information, can be automatically created, and a plan can be updated.

According to one embodiment of the present invention, the electric power plan system is provided, including, in place of the plan modification unit, a modification input unit configured to accept an input for modifying the electric power generation plan and/or the electric power sales plan.

According to the present invention, plan modifications by manual input become possible, and changes in situations that can greatly affect a user's revenue can be addressed, thereby reducing losses.

According to one embodiment of the present invention, the electric power plan system is provided, in which the plan modification unit and the modification input unit are prohibited from modifying the electric power generation plan and/or the electric power sales plan after a gate-closure time.

According to the present invention, by not accepting inputs after gate-closure when a plan cannot be modified, a user can be prevented from undertaking erroneous plan review.

According to one embodiment of the present invention, the electric power plan system is provided, in which the plan creation unit creates the electric power generation plan, in accordance with plan creation and submission rules pre-set for each target electric power generation facility.

According to the present invention, an electric power generation plan can be created that is tailored to individual user circumstances.

According to one embodiment of the present invention, the electric power plan system is provided, further including:
a display data generation unit configured to create display data, based on the electric power generation plan and/or the electric power sales plan, the display data being configured to:
divide and display the electric power generation plan and/or the electric power sales plan for each pre-set date and time;
indicate whether modification of the electric power generation plan and/or the electric power sales plan is permitted or prohibited, at least in accordance with a gate-closure time, and
for the divided electric power generation plan and/or the divided electric power sales plan, display which of the plan modification unit and the modification input unit is enabled.

According to the present invention, by devising a layout of a display screen on a user terminal, convenience of user operations can be improved. Effects of the Invention

According to the electric power plan creation system of the present invention, by sequentially updating an electric power generation plan and/or the electric power sales plan based on the latest information related to power supply and demand, not only can maximization of a user's revenue, such as that of an aggregator, and minimization of a risk of imbalance be achieved, but also the practical burden of updating can be significantly reduced. By displaying an updatable electric power generation plan and/or the electric power sales plan on a time basis, in accordance with pre-set plan submission rules, convenience of user operations can be improved.

### BRIEF DESCRIPTION OF THE DRAWINGS

FIG. 1 is a diagram illustrating an embodiment of a system configuration in the electric power plan creation system of the present invention;
FIG. 2 is a block diagram illustrating an embodiment of a hardware configuration in the electric power plan creation system of the present invention;
FIG. 3 is a block diagram illustrating an embodiment of a functional configuration of a management server, and information exchange with external institutions;
FIG. 4 is a diagram illustrating an example of a database (DB) configuration in a storage device in the electric power plan creation system of the present invention;
FIG. 5A is a diagram illustrating an example of a data table of an electric power generation facility in the electric power plan creation system of the present invention;
FIG. 5B is a diagram illustrating an example of the data table of the electric power generation facility in the electric power plan creation system of the present invention;
FIG. 5C is a diagram illustrating an example of the data table of the electric power generation facility in the electric power plan creation system of the present invention;
FIG. 6 is a graph illustrating electric power generation amount prediction values for selectable risk tolerances in the electric power plan creation system of the present invention;
FIG. 7 is a block diagram illustrating an embodiment of a functional configuration of a plan creation unit in the electric power plan creation system of the present invention;
FIG. 8A is a diagram illustrating an example of a BG data table in the electric power plan creation system of the present invention;
FIG. 8B is a diagram illustrating an example of the BG data table in the electric power plan creation system of the present invention;
FIG. 8C is a diagram illustrating an example of the BG data table in the electric power plan creation system of the present invention;
FIG. 8D is a diagram illustrating an example of the BG data table in the electric power plan creation system of the present invention;
FIG. 8E is a diagram illustrating an example of the BG data table in the electric power plan creation system of the present invention;
FIG. 8F is a diagram illustrating an example of the BG data table in the electric power plan creation system of the present invention;
FIG. 9A is a diagram illustrating an example of a data table for an electric power sales plan in the electric power plan creation system of the present invention;
FIG. 9B is a diagram illustrating an example of the data table for the electric power sales plan in the electric power plan creation system of the present invention;
FIG. 9C is a diagram illustrating an example of the data table for the electric power sales plan in the electric power plan creation system of the present invention;
FIG. 10A is a flowchart illustrating an embodiment of operations of a determination control unit in the electric power plan creation system of the present invention;
FIG. 10B is a flowchart illustrating an embodiment of operations of the determination control unit in the electric power plan creation system of the present invention;
FIG. 11 is a diagram illustrating an example of an initial user settings screen for an electric power generation plan in the electric power plan creation system of the present invention;
FIG. 12A is a diagram illustrating an example of a display screen for an electric power generation plan on a user terminal in the electric power plan creation system of the present invention;
FIG. 12B is a diagram illustrating an example of the display screen for the electric power generation plan on the user terminal in the electric power plan creation system of the present invention;
FIG. 12C is a diagram illustrating an example of the display screen for the electric power generation plan on the user terminal in the electric power plan creation system of the present invention;
FIG. 12D is a diagram illustrating an example of the display screen for an electric power generation plan on a user terminal in the electric power plan creation system of the present invention;
FIG. 12E is a diagram illustrating an example of the display screen for the electric power generation plan on the user terminal in the electric power plan creation system of the present invention;
FIG. 12F is a diagram illustrating an example of the display screen for the electric power generation plan on the user terminal in the electric power plan creation system of the present invention;
FIG. 13 is a diagram illustrating an example of an initial user settings screen for an electric power sales plan in the electric power plan creation system of the present invention;
FIG. 14A is a diagram illustrating an example of a display screen of a user's electric power sales plan in the electric power plan creation system of the present invention;
FIG. 14B is a diagram illustrating an example of the display screen of the user's electric power sales plan in the electric power plan creation system of the present invention;
FIG. 14C is a diagram illustrating an example of the display screen of the user's electric power sales plan in the electric power plan creation system of the present invention;
FIG. 15 is a diagram illustrating an example of a display screen of a user's plan creation schedule in the electric power plan creation system of the present invention;
FIG. 16 is a graph illustrating transitions of predicted and actual electric power prices in a hypothetical day;
FIG. 17 is a graph illustrating transitions of predicted and actual electric power prices in a hypothetical day.

### PREFERRED MODE FOR CARRYING OUT THE INVENTION

Hereinafter, an embodiment of the present invention will be described with reference to the drawings. The embodiment described below is an example, and the present invention is not limited to the embodiment.

In the present specification, an entity that uses the present plan creation system is referred to as a "user". The user may be an electric power producer, an electric power generation contractor, an aggregator, or a third party entrusted by any of these with a part or all of plan creation (hereinafter, "electric power generation contractor or the like"), and includes an operator who actually uses the present plan creation system under instructions from an electric power generation contractor or the like. The user may be plural. An administrator of the present plan creation system is not included in the user.

In the present specification, although the present plan creation system includes a system that creates an electric power generation plan and an electric power sales plan to be submitted to OCCTO (hereinafter, an electric power generation sales plan in the present specification), the present plan creation system is not limited thereto. For example, the present plan creation system includes a system that creates an electric power generation plan, a sales plan, and a storage battery operation plan that are prepared by an electric power producer, an electric power generation contractor, an aggregator the like for internal review, and a system that notifies a retail electric power supplier and the like of those plans. The electric power generation sales plan is created on a daily, weekly, monthly, and yearly basis. Among daily plans, a plan for the next day that is submitted by 12:00 noon on the previous day is referred to as a "next-day plan", and a plan for the same day is called a "same-day plan". The same-day plan is submitted in a case where a modification is made to the next-day plan. Hereinafter in the present specification, "an electric power generation plan and/or an electric power sales plan" refers to an electric power generation plan and/or an electric power sales plan that is not limited to an electric power generation sales plan to be submitted to OCCTO. In a case where distinction between an electric power generation sales plan and an electric power generation plan and/or an electric power sales plan is unnecessary, the term "plan" may be used.

### [1. Overall Configuration]

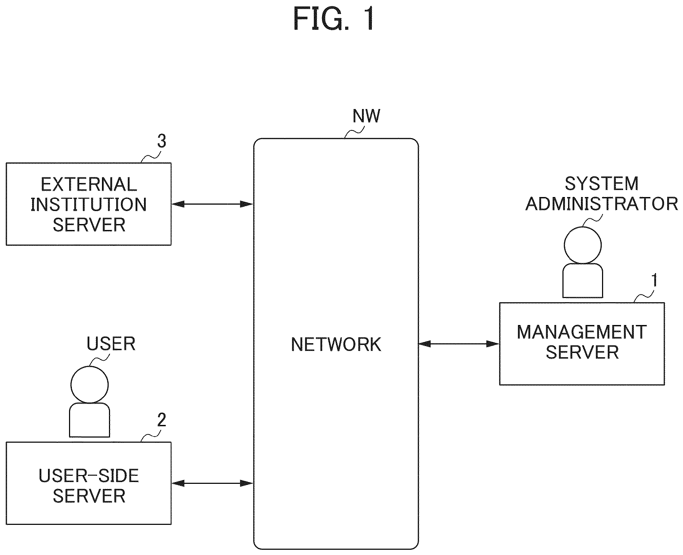

FIG. 1 illustrates an embodiment of an overall configuration of the present plan creation system. The present plan creation system in FIG. 1 includes a management server 1 managed by a system administrator, a user-side server 2 used by users of the present plan creation system, and an external institution server 3, which are connected to be capable of mutual communication via a network NW. The form of the network NW is not particularly limited, and, for example, Bluetooth (registered trademark), Wi-Fi, a LAN (Local Area Network), or the Internet can be adopted. The user-side server 2 is connected to user terminals such as smartphones, tablet computers, and desktop computers, and a user performs data communication with other devices by operating a user terminal to connect to the network NW. The external institution server 3 is a server other than the management server 1 and the user-side server 2, which performs transmission and reception of information with the present plan creation system S, and includes servers owned by OCCTO and JEPX, and servers that manage electric power generation facilities.

### [1.1 Hardware Configuration of the Present Plan Creation System]

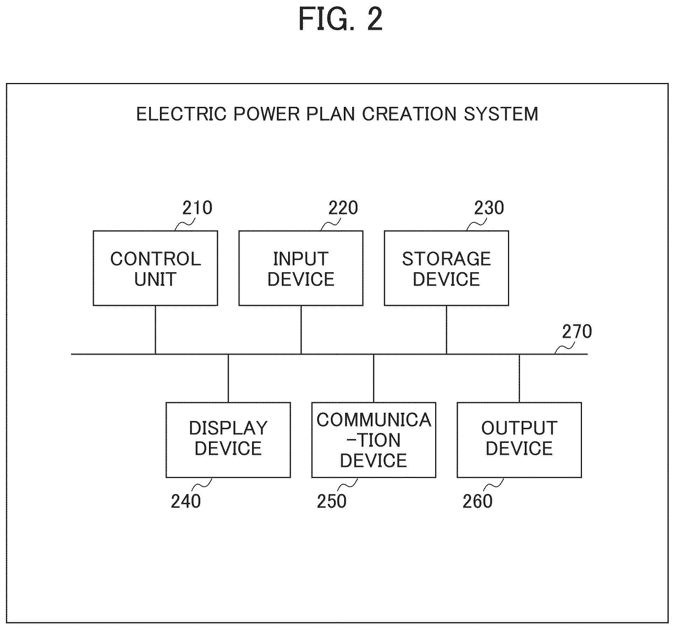

Next, a hardware configuration of the present plan creation system will be described. FIG. 2 illustrates a hardware configuration in one embodiment of the present plan creation system. As illustrated in FIG. 2, the present plan creation system includes a control unit 210, an input device 220, a storage device 230, a display device 240, a communication device 250, and an output device 260, which are connected via a system bus 270.

In FIG. 2, the control unit 210 is, for example, a processor such as a CPU, and executes a program that describes processing in the present plan creation system. The input device 220 is constituted by, for example, a keyboard and a mouse, and is used by an administrator of the present plan creation system or the like to input various types of information. The storage device 230 includes various memories such as a RAM (Random Access Memory) and a ROM (Read Only Memory), and storage devices such as a hard disk and an SSD, and stores an application program to be executed by the control unit 210, necessary data obtained during processing by the control unit 210, and information acquired from external institutions or the like. The storage device 230 may also be used as a temporary storage area at the time of program execution. The display device 240 is constituted by a display, an LCD (liquid crystal display panel) and the like, and displays various screens for an administrator. The communication device 250 is a receiver and a transmitter that perform communication processing with users and external institutions via the network NW. The output device 260 is, for example, a printer. FIG. 2 is an example, and the hardware configuration of the present plan creation system is not limited to the example in FIG. 2.

Operations up to a state in which an application program for executing functions of the present plan creation system becomes executable will be described. In the present plan creation system having the above-described configuration, for example, an application program for executing functions of the present plan creation system is downloaded from a CD-ROM set in a CD (Compact Disc)-ROM drive or from a DVD-ROM set in a DVD (Digital Versatile Disc)-ROM drive that are not illustrated, or is downloaded via a transmission medium such as the Internet through the communication device 250, is saved in the storage device 230, and is then installed. When executing the application program, a program stored in the storage device 230 is started. In this state, the control unit 210 executes functions as the present plan creation system, in accordance with the application program started from the storage device 230. The application program for executing functions of the present plan creation system does not necessarily have to be stored in the storage device 230 within the management server 1, and, for example, may be stored in a server other than the management server, and may be executed by access via a network from the management server 1 or the user-side server 2. In a case where functions of the present plan creation system are executed via a network, the system may prompt a user to input a user ID and a password.

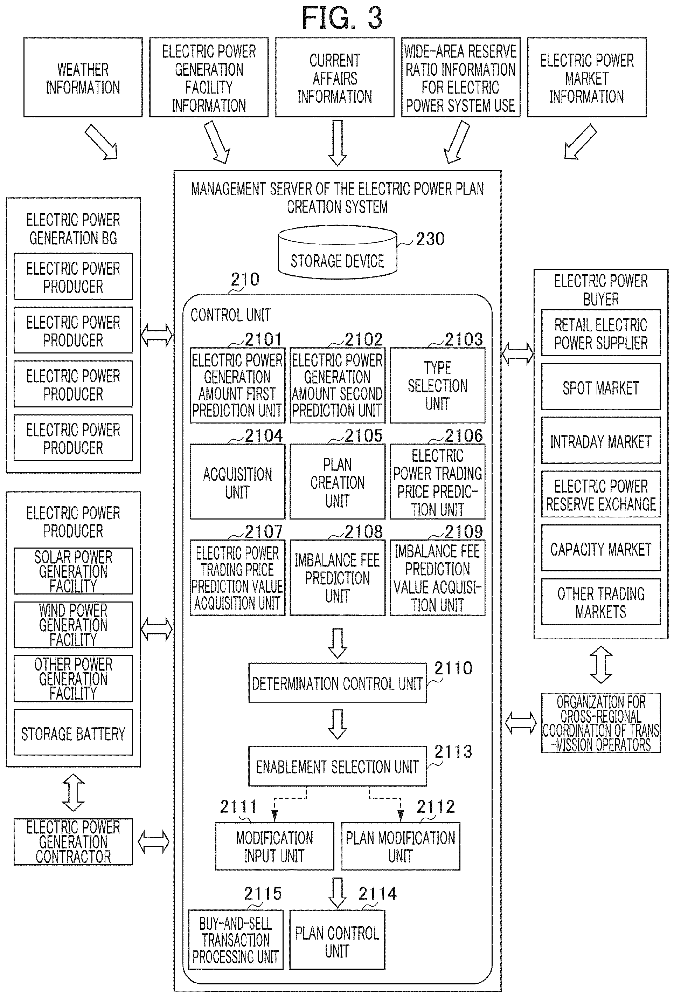

Functions of the present plan creation system will be described. FIG. 3 is a schematic diagram illustrating relationships of a functional configuration in one embodiment of the present plan creation system, and transmission and reception of information with external institutions.

### [1.2 Transmission and Reception of Information with External Institutions, and the Like]

The present plan creation system performs data communication, via the network NW, with external institutions including an electric power producer, an electric power generation contractor, an aggregator, JEPX, a retail electric power supplier, information sources, and OCCTO, and with users of the present plan creation system, in order to create an electric power generation sales plan. Data communication is performed by the communication device 250.

### [1.2.1 Transmission and Reception of Information with Electric Power Generation Facilities, and the Like]

The present plan creation system acquires, from electric power generation facilities owned by an electric power producer and an electric power generation BG (balancing group), information on electric power generation amounts for each time period, presence or absence of output curtailment and equipment failures, and operation status. In the present specification, an electric power producer is a business operator that owns generation equipment, such as solar, wind, hydroelectric, geothermal, and biomass power generations, and performs a power generation business. An electric power generation BG is a group (balancing group) of electric power producers that perform settlement of imbalance related to power transactions. In a case where an electric power generation facility includes a storage battery, information related to electric power charged in the storage battery, and operation status of the storage battery, is also acquired. Information from the electric power generation facility is acquired by an acquisition unit 2104 (described later) from an external institution server 3 that manages the electric power generation facility. The information that the present plan creation system has acquired from the electric power generation facility is temporarily stored in an electric power generation facility information DB 402 by the acquisition unit 2104, and is used when creating an electric power generation plan or the like.

Generation equipment and a storage battery may be installed, for example, on premises of a specified customer, in accordance with a PPA (Power Purchase Agreement). In such a case, the present plan creation system can acquire, based on time-series information detected by sensors installed in the electric power generation equipment, information related to electric power generation, such as an electric power generation amount of the electric power generation equipment, an electric power generation time, and an electric power generation efficiency, and information related to a state of the storage battery, such as a temperature state of the storage battery including a temperature on a cell basis, an SOC (State of Charge), an elapsed cycle count, a degree of degradation, and an SOH (State of Health).

### [1.2.2 Transmission and Reception of Information with Electric Power Generation Contractors, or the Like]

An electric power generation sales plan is submitted to OCCTO by an electric power generation contractor or the like.

An electric power generation contractor or the like must, by 12:00 noon on a day before a power supply-and-demand date, submit to OCCTO an electric power generation sales plan (a next-day plan) prepared in 48 frames at 30-minute intervals. After submission of the next-day plan, in order to respond to changes in information related to power supply and demand, the submitted plan may be modified, and a new plan (a same-day plan) may be submitted by a gate-closure time (one hour before an actual supply-and-demand date). An electric power generation contractor or the like operates the present plan creation system using their own user terminal, and creates a plan using data communication via the network NW. The timing for plan creation, and the number of frames per day, are examples, and are not limited thereto.

### [1.2.3 Transmission and Reception of Information with Electric Power Trading Counterparties]

The present plan creation system performs transmission and reception of information with electric power trading counterparties. Electric power trading counterparties include JEPX, an Electric Power Reserve Exchange, a capacity market, a retail electric power supplier that supplies electric power based on a bilateral contract, and a general transmission and distribution utility involved in imbalance settlement. Transmission and reception with electric power trading counterparties, such as transaction price information in each market, and information related to electric power trading with a retail electric power supplier, are performed by using the communication device 250, via data communication over the network NW, between respective external institution servers 3 that manage power trading counterparties. In particular, information related to an electric power trading price, which is transmitted and received with electric power trading counterparties, is acquired by the acquisition unit 2104, and is stored in an electric power price information DB 405 (described later).

### [1.2.4 Transmission and Reception of Information with Information Providers]

The present plan creation system acquires, from external information sources, information necessary for creating an electric power generation plan and/or an electric power sales plan. Information acquired from the information sources includes: weather forecast information acquired from a weather company,; electric power generation facility information related to an electric power generation facility such as accidents or stoppages of the electric power generation facility, restrictions on electric power use, planned power outages, and calculation indexes used for calculating correction charges; current affairs information related to accidents and economic conditions such as a rise in crude oil prices and liquefied natural gas (LNG) prices, and an outbreak of war; electric power market information such as an imbalance fee unit price, an imbalance amount, and transaction prices in a spot market and an intraday market; and wide-area reserve ratio information published by OCCTO. However, information is not limited thereto as long as the information can affect an electric power generation plan and/or an electric power sales plan. The present plan creation system acquires the information from the information sources by the acquisition unit 2104 by using data communication via the network NW, stores information related to the electric power generation facility in the electric power generation facility information DB 402, stores information related to an electric power price and an imbalance fee in the electric power price information DB 405, and stores other current affairs information in a current affairs information DB 403.

### [1.2.5 Submission of Plans to OCCTO]

An electric power generation contractor or the like submits an electric power generation sales plan to OCCTO. Therefore, a user performs submission of an electric power generation sales plan, and transmission and reception of other information, by data communication via the network NW between the management server 1 of the present plan creation system and an external institution server 3 owned by OCCTO. Submission of the electric power generation sales plan is executed by a plan control unit 2114 using data communication via the network NW.

### [2. Structure of Management Server]

A series of processing accompanying creation of a plan by the present plan creation system is implemented by executing, in the control unit 210, application programs corresponding to respective functions, based on data stored in a plurality of databases (DBs) in the storage device 230.

### [2.1 Storage Device]

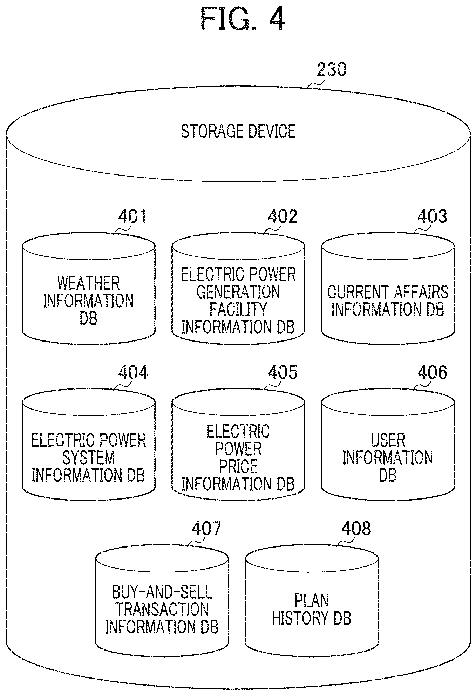

FIG. 4 illustrates functions of DBs included in the storage device 230. The storage device 230 is provided with a weather information DB 401, an electric power generation facility information DB 402, a current affairs information DB 403, an electric power system information DB 404, an electric power price information DB 405, a user information DB 406, a buy-and-sell transaction information DB 407, and a plan history DB 408.

The weather information DB 401 stores weather forecast data acquired from a weather information disclosure institution or the like and past weather data (hereinafter, weather information). At least the latest weather forecast data available by a bidding deadline for electric power transactions is acquired. The weather information DB 401 stores weather forecasts and actual data for each specific time period in a specific region. Types of weather information include, for each specific region and time period, weather, temperature, humidity, cloud cover, wind direction, wind speed, solar irradiance, rainfall, and the like. The weather information is acquired by the acquisition unit 2104 via the network NW, and is stored in the weather information DB 401.

The electric power generation facility information DB 402 stores actual electric power generation amount data and electric power generation capacity for each specific time period at a specific electric power generation facility owned by an electric power producer and an electric power generation BG. Specifically, the information includes, for example, a DC generation amount, an AC generation amount, presence or absence of output curtailment and equipment failures, operation status information, an installation location of the electric power generation facility, an address at the location, latitude, longitude, elevation, information such as a DC capacity of the electric power generation facility, an AC capacity, the number of PCS (Power Conditioning System) units, a PCS manufacturer, an operation start time, and the like. Information owned by the electric power generation facility is acquired by the acquisition unit 2104 via the network NW, and is stored in the electric power generation facility information DB 402.

The electric power generation facility information DB 402 also stores electric power generation amount prediction information calculated by an electric power generation amount first prediction unit 2101 and an electric power generation amount second prediction unit 2102, which will be described later, and generation amount prediction information created by an institution outside the present plan creation system. In other words, the electric power generation facility information DB 402 stores, in association, an electric power generation amount prediction value and actual electric power generation amount value for a specific time period at a specific electric power generation facility. The electric power generation amount prediction information includes information such as an electric power generation amount prediction value, a maximum value and a minimum value of an assumed prediction error range, and a prediction error relative to an actual generation amount. Generation amount prediction information created by an external institution is acquired by the acquisition unit 2104 via the network NW, and is stored in the electric power generation facility information DB 402. Generation amount prediction information calculated by the electric power generation amount first prediction unit 2101 and the electric power generation amount second prediction unit 2102 is stored in the electric power generation facility information DB 402 by the electric power generation amount first prediction unit 2101 and the electric power generation amount second prediction unit 2102. The electric power generation facility information DB 402 also stores electric power generation amount prediction values calculated for respective electric power generation amount prediction types, which will be described later.

The current affairs information DB 403 stores current affairs information related to accidents and economic conditions for each specific date and time period, such as increases in crude oil prices and liquefied natural gas (LNG) prices, and outbreaks of war. The acquisition unit 2104 acquires the current affairs information from a current affairs information source via the network NW, and stores the current affairs information in the current affairs information DB 403.

The electric power system information DB 404 stores wide-area reserve ratio information published by OCCTO. Specifically, values of wide-area reserve ratio for specific time periods in an area to which an electric power generation facility belongs are acquired by the acquisition unit 2104 from OCCTO's website, and are stored in the electric power system information DB 404. The wide-area reserve ratio information is data indicating tightness of electric power supply. The past wide-area reserve ratio information is used as training data for learned models used by the electric power generation amount first prediction unit 2101 and the electric power generation amount second prediction unit 2102. The future wide-area reserve ratio information is used, as input data for calculating predictions of electric power price, for creation of electric power generation sales plans.

The electric power price information DB 405 stores, for each time period on a specific day, actual and predicted imbalance fee, and actual data (contract prices) and prediction values of electric power trading prices in various electric power trading markets, such as a spot market and an intraday market on JEPX, or an Electric Power Reserve Exchange and a capacity market. The electric power price information DB 405 also stores prediction values of surplus and shortage imbalance amounts. Here, the actual imbalance fee is acquired by the acquisition unit 2104 from OCCTO's website, and the actual electric power trading price in the spot market and the intraday market is acquired by the acquisition unit 2104 from JEPX's website, and the acquired values are stored in the electric power price information DB 405. Prediction values of imbalance fee are stored in the electric power price information DB 405 by either an imbalance fee prediction unit 2108 or an imbalance fee prediction value acquisition unit 2109, and prediction values of electric power trading prices are stored by an electric power trading price prediction unit 2106 or an electric power trading price prediction value acquisition unit 2107.

The user information DB 406 stores basic information on a user (a user name, login information (an account) for the present plan creation system, information on electric power generation facilities under the user's control, information on a balancing group, and the like, and in addition, selections of electric power generation amount prediction types to be described later, a plan creation schedule, modification conditions for an electric power generation sales plan, and limits on the number of modifications), and further stores transaction cost information related to electric power for each user. Transaction cost information includes, for example, transaction costs arising from a user's buying and selling of electric power, a purchase price of a storage battery, a land-use fee, and a wheeling cost for transmitting electric power over an electric power system. Condition setting values at the time of creating and modifying an electric power generation sales plan that will be submitted to OCCTO, in a plan creation unit 2105 to be described later, are also stored. Here, basic information and transaction cost information of each user are stored in the user information DB 406 by input by an administrator of the present plan creation system or by a user, and condition setting values used for plan creation are stored in a plan history DB 408 together with plan data by a plan control unit 2114 to be described later.

The buy-and-sell transaction information DB 407 stores a user's actual electric power buy-and-sell transaction data for specific time periods. Specifically, the information includes a user's actual transaction data in various electric power trading markets, such as a spot market, an intraday market, an Electric Power Reserve Exchange, and a capacity market, a unit price of electric power trading and a total sales volume, a total buy-and-sell amount, a payment amount and a sales amount of a user associated with occurrence of imbalance, actual sales data to a retail electric power supplier, and a user's revenue calculated from those. The actual electric power buy-and-sell transaction data is stored in the buy-and-sell transaction information DB 407 by a buy-and-sell transaction processing unit 2115 to be described later.

The plan history DB 408 stores plan data created by the present electric power plan system. The plan creation unit 2105 creates plans, and stores all plans in the plan history DB 408. The stored plan data is used, together with the past actual electric power buy-and-sell transaction data, as training data for future plan creation. The plan history DB 408 also stores electric power generation amount prediction types (described later) used for plan creation, modified electric power generation plan values, and data related to modified plans.

### [2.2 Plan Creation Functions]

Next, a functional configuration of the control unit 210 in the present plan creation system will be described with reference to FIG. 3. In the present plan creation system, the control unit 210 starts application programs saved in the storage device 230, and realizes predetermined functions by using data stored in the above-described DBs in the storage device 230. Functions executed in the control unit 210 include units such as an electric power generation amount first prediction unit 2101, an electric power generation amount second prediction unit 2102, a type selection unit 2103, an acquisition unit 2104, a plan creation unit 2105, an electric power trading price prediction unit 2106, an electric power trading price prediction value acquisition unit 2107, an imbalance fee prediction unit 2108, an imbalance fee prediction value acquisition unit 2109, a determination control unit 2110, a modification input unit 2111, a plan modification unit 2112, an enablement selection unit 2113, a plan control unit 2114, and a buy-and-sell transaction processing unit 2115.

The electric power generation amount first prediction unit 2101 calculates future electric power generation amount prediction values, based on the past electric power generation amount prediction data and the corresponding past actual electric power generation amount data. The past actual electric power generation amount data is acquired from an electric power generation facility, and data stored in the electric power generation facility information DB 402 is used. The electric power generation amount prediction value is prediction values that the electric power generation amount first prediction unit 2101 has calculated in the past, and data stored in the electric power generation facility information DB 402 is used. Other equipment information stored in the electric power generation facility information DB 402 may also be considered when calculating electric power generation amount prediction values. Calculation of electric power generation amount prediction values may use an average of past actual electric power generation amount data over a predetermined period, or may be performed by a learned model using past electric power generation amount prediction data and actual electric power generation amount data as training data, and additional information such as past electric power generation facility information. Electric power generation amount prediction values calculated by the electric power generation amount first prediction unit 2101 are stored in the electric power generation facility information DB 402. The calculated electric power generation amount prediction values may be used as training data for future calculation of electric power generation amount prediction values. The electric power generation amount first prediction unit 2101 is mainly used to calculate prediction values of electric power generation amounts in generation equipment (such as geothermal power generation and biomass power generation) that are less susceptible to short-term weather fluctuations.

The electric power generation amount second prediction unit 2102 calculates future electric power generation amount prediction values, based on past electric power generation amount prediction data, corresponding past actual electric power generation amount data, past weather information, and past electric power generation facility information. The past actual electric power generation amount data is acquired from an electric power generation facility, and data stored in the electric power generation facility information DB 402 is used. The past electric power generation amount prediction data is prediction values that the electric power generation amount second prediction unit 2102 has calculated in the past, and data stored in the electric power generation facility information DB 402 is used. Calculation of electric power generation amount prediction values may use an average of past actual electric power generation amount data over a predetermined period, or may be performed by a learned model using additional information as training data, such as past electric power generation amount prediction data and actual electric power generation amount data, electric power generation facility information, weather information, and current affairs information. The calculated electric power generation amount prediction values may be used as training data for future calculation of electric power generation amount prediction values. The electric power generation amount second prediction unit 2102 is mainly used to calculate prediction values of electric power generation amounts in generation equipment, such as solar power generation and wind electric power generation, in which generation amounts are susceptible to effects of weather fluctuations.

For example, in a case of solar power generation, the electric power generation amount second prediction unit 2102 can predict an electric power generation amount and an electric power generation time of a solar power generation facility by using solar irradiance and sunshine duration, based on weather forecast information for an area in which the solar power generation facility is installed, and by using an electric power generation efficiency of the solar power generation facility. The electric power generation efficiency of the solar power generation facility varies due to factors such as aging of a solar panel used, dirt, a type of panel, and an installation angle, and therefore the electric power generation efficiency may be calculated by a predetermined calculation formula weighted for each of the factors. Alternatively, the electric power generation efficiency may be calculated by using a learned model that has learned, as training data, relationships between the factors and past actual electric power generation amount data. In a case of wind electric power generation, weather information used for prediction differs in that wind speed and wind direction are used, and in a case of hydroelectric power generation, rainfall is used, but other aspects are similar, and therefore description thereof is omitted. The calculated electric power generation amount prediction values are saved in the electric power generation facility information DB 402.

The electric power generation amount first prediction unit 2101 and the electric power generation amount second prediction unit 2102 calculate an electric power generation amount prediction range defined by a minimum value of electric power generation amount prediction and a maximum value of electric power generation amount prediction, together with electric power generation amount prediction values. The electric power generation amount prediction range refers to, for example, a prediction interval that is regarded as reliable. Information on the electric power generation amount prediction range defined by the minimum value of electric power generation amount prediction and the maximum value of electric power generation amount prediction that the electric power generation amount first prediction unit 2101 and the electric power generation amount second prediction unit 2102 have calculated is saved, together with the electric power generation amount prediction values, in the electric power generation facility information DB 402.

The electric power generation amount first prediction unit 2101 and the electric power generation amount second prediction unit 2102 can repeatedly calculate prediction values for a specific time, at intervals pre-set by a user separately from a plan creation schedule, until a gate-closure time (one hour before an actual supply-and-demand date). This is because electric power generation amount prediction values have value for use as training data, and because electric power generation amount prediction values can vary greatly due to changes in weather and current affairs information, and can therefore also be used as reference for calculation of an electric power generation amount prediction range.

Contents of data of electric power generation amount prediction values by the electric power generation amount first prediction unit 2101 and/or the electric power generation amount second prediction unit 2102 will be described.

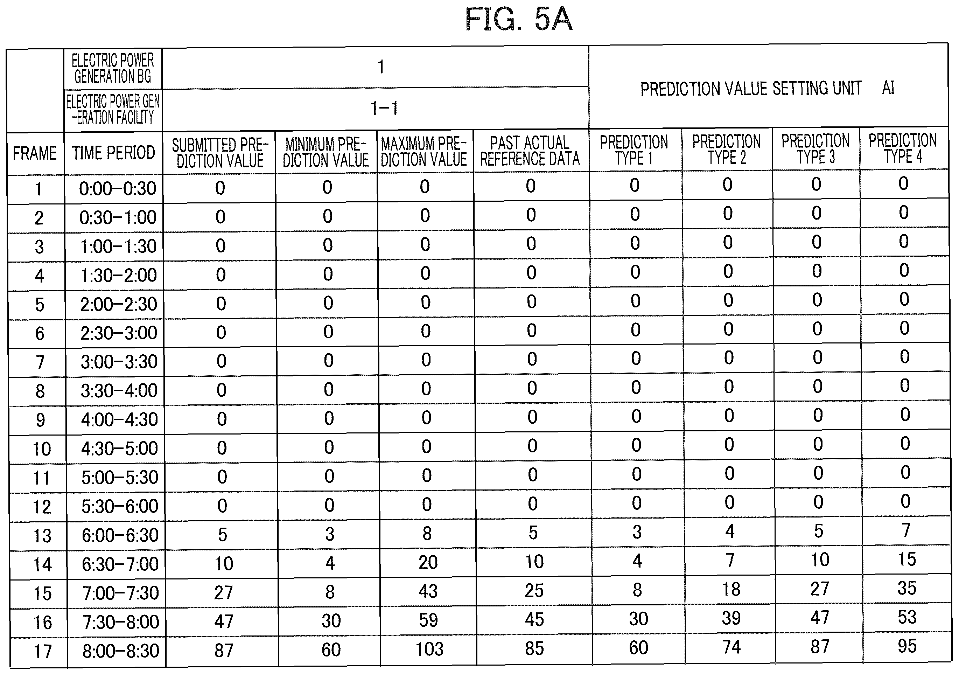

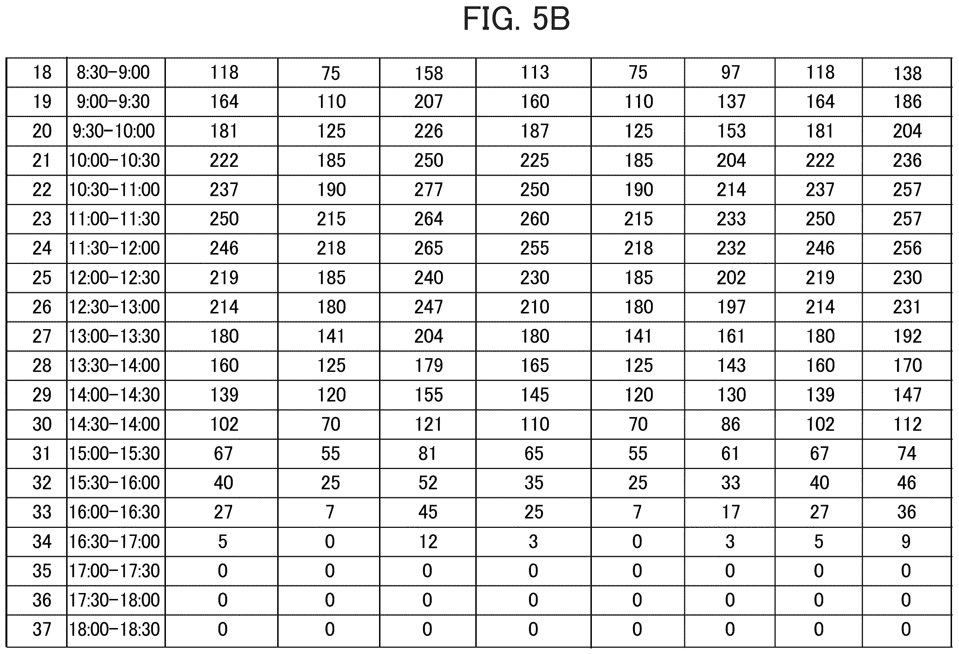

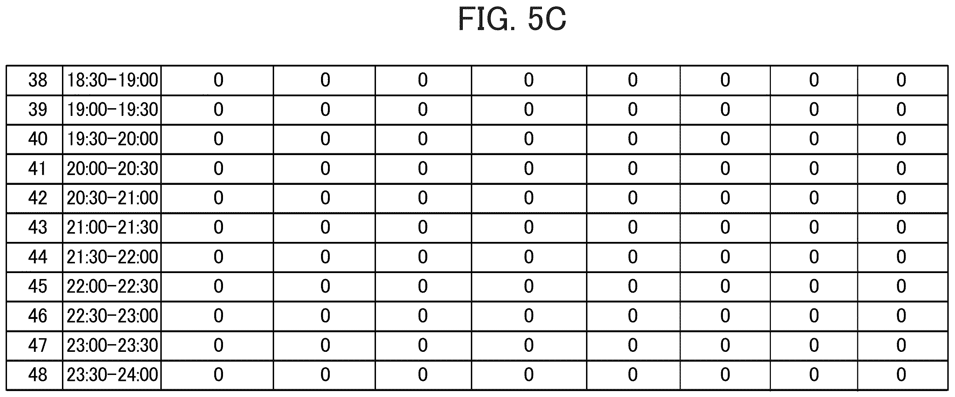

FIGS. 5A to 5C illustrate excerpts of a data table saved in the electric power generation facility information DB 402 that relate to electric power generation amount prediction values and actual electric power generation amount value on a specific day at a solar power generation facility 1-1, where FIG. 5A illustrates frames 1 to 17, FIG. 5B illustrates frames 18 to 37, and FIG. 5C illustrates frames 38 to 48. In the data table, electric power generation amount prediction values, the minimum value of electric power generation amount predictions, and the maximum value of electric power generation amount predictions by the electric power generation amount first prediction unit 2101 or the electric power generation amount second prediction unit 2102 are calculated, and also, electric power generation amount prediction values for each electric power generation amount prediction type (prediction types 1 to 4) in accordance with the risk tolerance pre-set based on the electric power generation amount prediction value are calculated, in which the calculations are stored together with actual electric power generation amount value. The data table may include types of the prediction value setting method (e.g., using Al in FIGS. 5A to 5C). Each value is divided into 48 frames per day at 30-minute intervals, and a data table is created for each electric power generation facility. Data in the data table is used when a plan creation unit 2105, which will be described later, creates a plan.

Risk tolerance will be described. When creating an electric power generation plan, a user needs to calculate generation amount prediction values used as electric power generation amount prediction values, not as electric power generation amount prediction values themselves that the electric power generation amount first prediction unit 2101 and/or the electric power generation amount second prediction unit 2102 have calculated, but as electric power generation amount prediction values that take into account risk tolerances for surplus and shortage imbalance, and needs to determine bidding conditions by using those values. Therefore, in creating an electric power generation plan, it is preferable that an electric power generation amount prediction type in accordance with risk tolerances for surplus and shortage imbalance be specified, and that a bidding policy be determined by using calculated electric power generation amount prediction values.

Selected electric power generation amount prediction types preferably include: values calculated from an electric power generation amount prediction value; a maximum value of electric power generation amount prediction values; a minimum value of electric power generation amount prediction values; a value calculated from an average of electric power generation amount prediction values over a predetermined period; and a value calculated from an average of part or all of past actual electric power generation amount data. For example, the types include: "minimize shortage imbalance risk (use a minimum value of the electric power generation amount prediction values)"; "mitigate shortage imbalance risk (use the value intermediate between the electric power generation amount prediction value and the minimum value of the electric power generation amount prediction value)"; "minimize risks of both surplus and shortage imbalance (use an electric power generation amount prediction value)"; and "maximize bid quantity (use the value intermediate between the electric power generation amount prediction value and the electric power generation amount prediction value)".

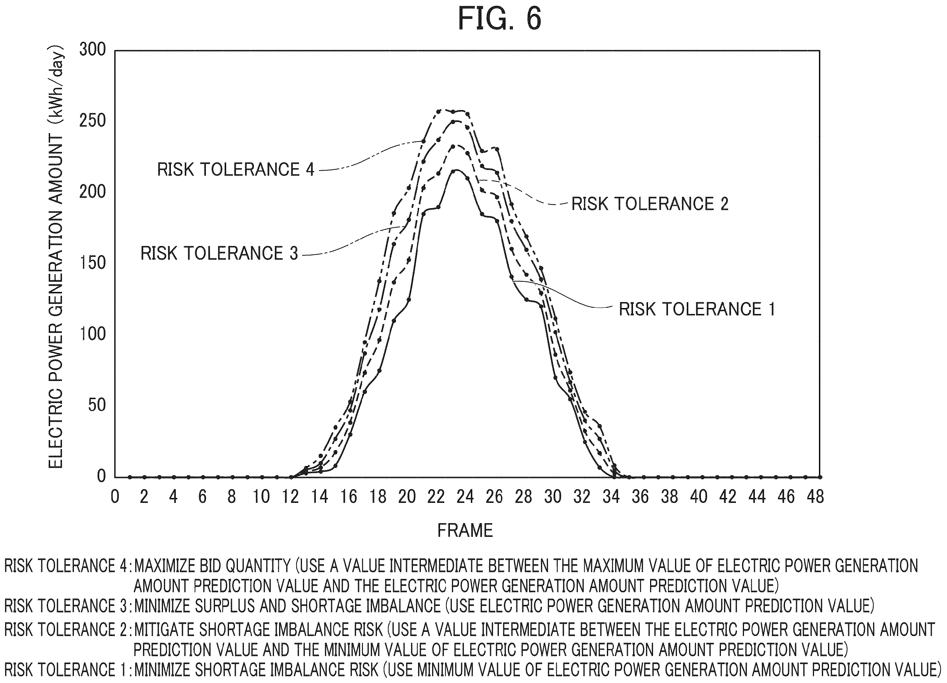

FIG. 6 is a graph illustrating electric power generation amount prediction values of electric power generation amount prediction types 1 to 4 corresponding to risk tolerances 1 to 4, respectively. Such a graph may be specified to be displayed on a screen when a user creates an electric power generation plan. The past electric power generation amount prediction data saved in the electric power generation facility information DB 402 may be graphed together with past actual electric power generation amount data, and may be specified to be displayed on a screen at a user's request. Displaying information using past data at the time of plan creation is realized by the plan creation unit 2105, which will be described later, acquiring information saved in respective DBs, and converting the information into data such as graphs. By graphing electric power generation amount prediction values for each electric power generation amount prediction type, and displaying on a user terminal, a user can consider risks of surplus and shortage imbalance, and can create a plan appropriately.

A type selection unit 2103, in response to a user's request, selects a specific electric power generation amount prediction type from among a plurality of electric power generation amount prediction types in accordance with the above-described risk tolerance. The electric power generation amount prediction values calculated for respective electric power generation amount prediction types are saved in the electric power generation facility information DB 402. Selection of an electric power generation amount prediction type can be pre-set by a user, and the setting is saved by the type selection unit 2103 in the user information DB 406. An electric power generation amount prediction type used by a user for plan creation is saved in the plan history DB 408 together with a created plan.

An acquisition unit 2104 acquires various types of information from institutions outside the management server 1 of the present plan creation system, and saves the information in respective DBs in the storage device 230. The information that the acquisition unit 2104 acquires includes weather information, electric power generation facility information, current affairs information, wide-area reserve ratio information, and electric power trading price information, and, in a case where an external institution calculates prediction values of electric power trading prices and imbalance fee, the acquisition unit acquires those pieces of information, and saves the pieces of information in respective DBs in the storage device 230.

In the present plan creation system, in a case where an institution outside the present plan creation system calculates generation amount prediction values, the acquisition unit 2104 acquires the electric power generation amount prediction values from those institutions, and the plan creation unit 2105, which will be described later, creates plans using the acquired prediction values.

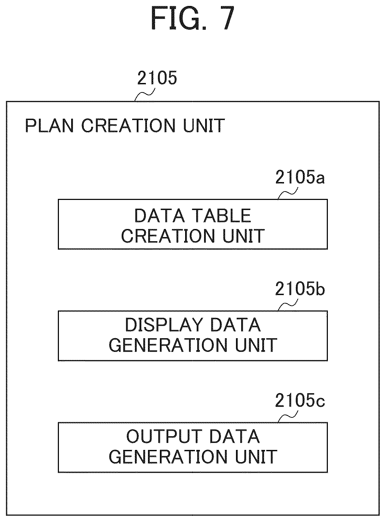

A plan creation unit 2105 automatically creates plans, in accordance with plan creation and submission rules pre-set by a user, based on electric power generation amount prediction values corresponding to an electric power generation amount prediction type selected by the user. FIG. 7 is a block diagram illustrating functions of the plan creation unit 2105. The plan creation unit 2105 includes a data table creation unit 2105a that creates a data table serving as a basis for a plan, a display data generation unit 2105b that converts a created data table into display data to be displayed on a user terminal, and an output data generation unit 2105c that converts data into respective data including submission data for submitting an electric power generation sales plan to OCCTO, and data used for bidding on JEPX.

The display data generation unit 2105b can create new display data, in accordance with a user's request, by editing, in addition to a data table created by the data table creation unit 2105a, data saved in respective DBs in the storage device 230, and information acquired from external institutions. For example, schedule table data that manages a submission schedule of electric power generation sales plans to OCCTO can be created, and convenience in a user's plan creation, browsing, and modifications can be improved. Examples of layout of schedule table data for OCCTO include display method: dividing an electric power generation sales plan for each pre-set date and time; distinguishing and displaying whether modifications of an electric power generation sales plan are permitted or prohibited at least in accordance with a gate-closure time, and, for a divided electric power generation sales plan; displaying which of a plan modification unit 2112 and a modification input unit 2111 is enabled. However, layouts are not limited thereto.

Other display data that the display data generation unit 2105b can create includes, for example, a browsing page with one or more links selected from a group consisting of an operation status of an electric power generation facility, weather forecast data, electric power trading prices in a spot market or an intraday market, an imbalance fee unit price, and a wide-area reserve ratio information, and data for displaying information acquired via web scraping, but is not limited thereto.

The output data generation unit 2105c converts a data table created by the data table creation unit 2105a into a format that can be used for plan submission to OCCTO, for bidding in various electric power trading markets such as JEPX, an Electric Power Reserve Exchange, and a capacity market, or for plan notification to a retail electric power supplier, and the like.

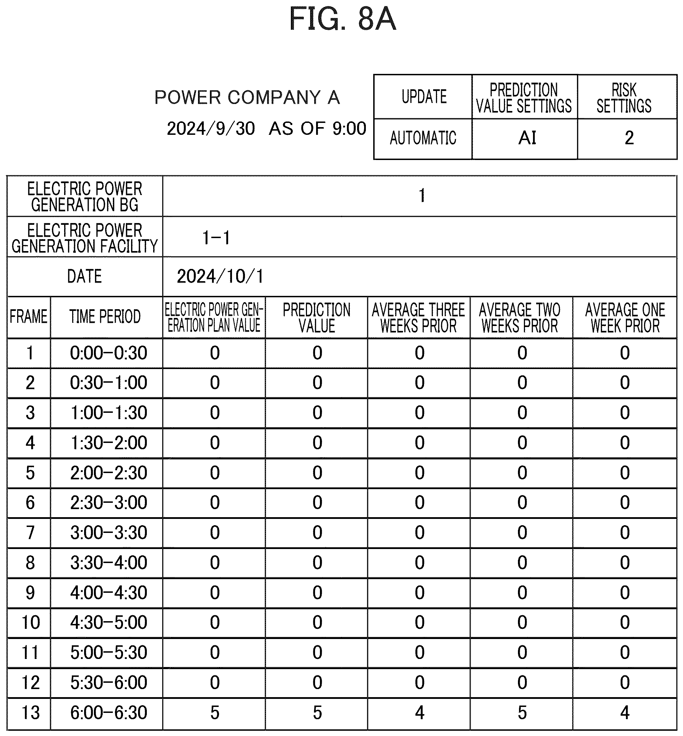

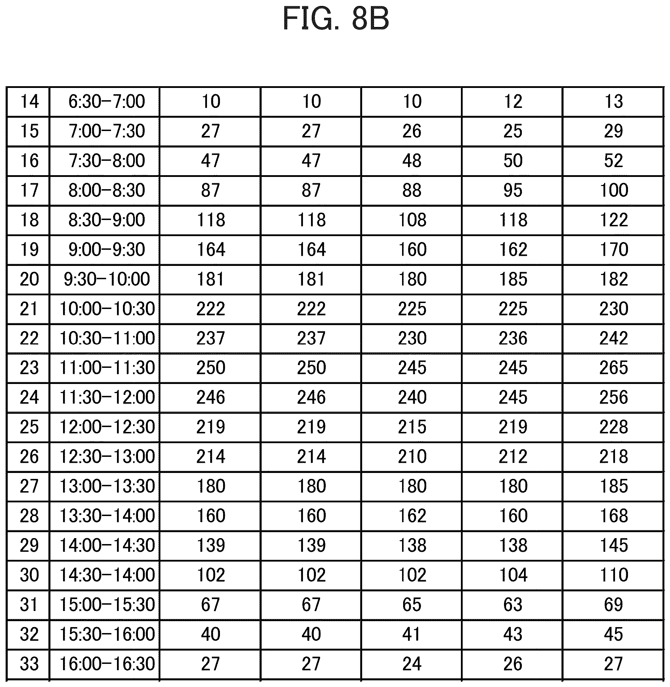

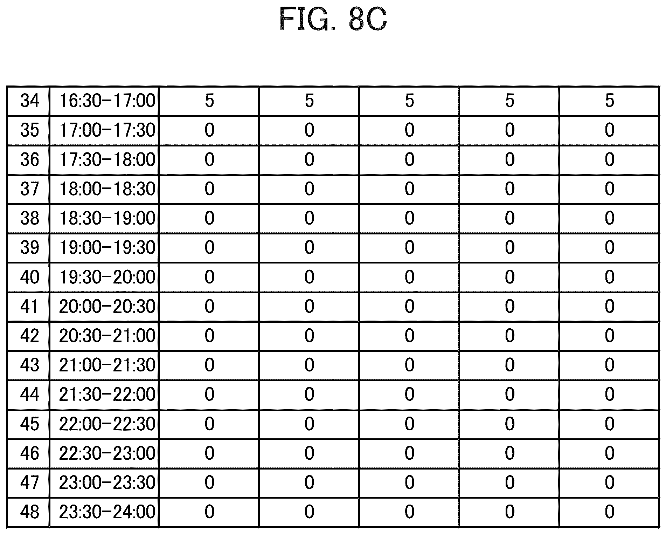

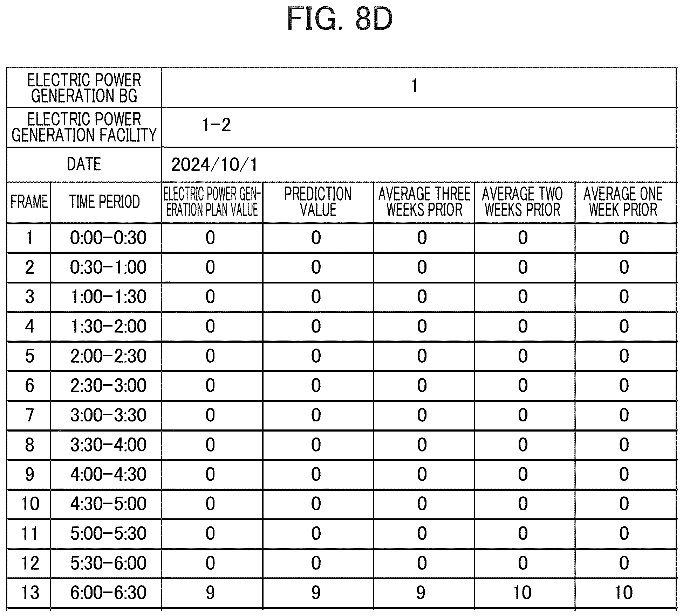

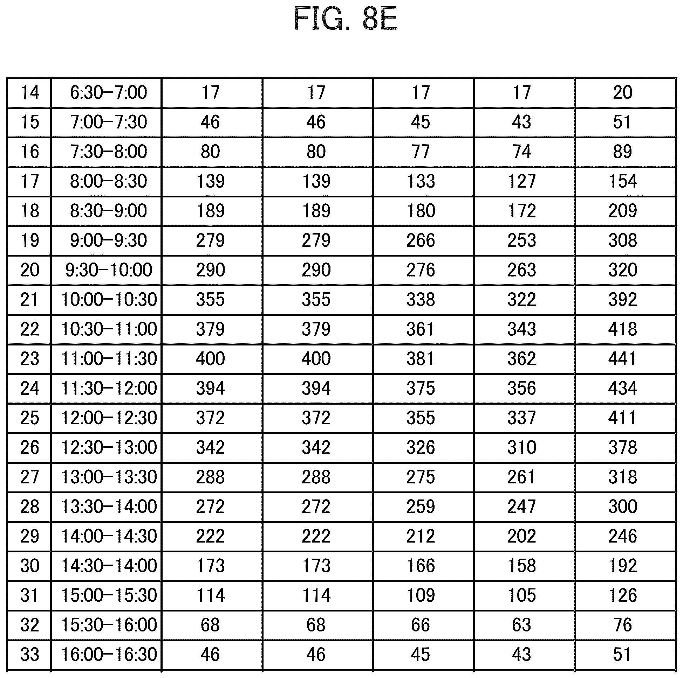

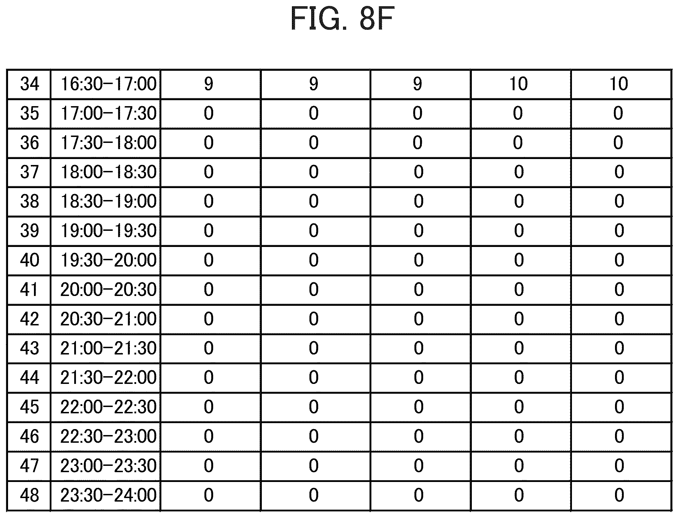

FIGS. 8A to 8F illustrate an example of a data table for an electric power generation plan created by the plan creation unit 2105 (data table creation unit 2105a), where FIG. 8A illustrates frames 1 to 13 for the electric power generation facility 1-1, FIG. 8B illustrates frames 14 to 33, FIG. 8C illustrates frames 34 to 48, FIG. 8D illustrates frames 1 to 13 for the electric power generation facility 1-2, FIG. 8E illustrates frames 14 to 33, and FIG. 8F illustrates frames 34 to 48 for the electric power generation facility 1-2, respectively. In the example of FIGS. 8A to 8F, the electric power generation plan is as of 9:00 a.m. on September 30, 2024, which is the day before an actual supply-and-demand date for October 1, 2024, and constitutes part of a next-day plan to be submitted to OCCTO by noon (12:00) on September 30. Power Company A operates the electric power generation BG 1 having two solar power generation facilities (1-1 and 1-2). In the electric power generation plan, electric power generation amounts are listed for each 30-minute frame, and the table includes actual generation plan values (electric power generation amount prediction values calculated based on a selected electric power generation amount prediction type), electric power generation amount prediction values calculated by the electric power generation amount second prediction unit 2102, and averages of actual electric power generation amount value over the previous three weeks to the previous week. An upper-right portion of the data table clearly states initial settings such as a type of update (manual or automatic), an electric power generation amount prediction type, and a risk tolerance. In a case where a risk tolerance is selected, a corresponding electric power generation amount prediction type may be automatically entered, and, in a case where an electric power generation amount prediction type is selected first, a corresponding risk tolerance may be automatically entered. A "prediction value setting" in FIGS. 8A to 8F indicates, for example, use of a learned model (AI) for electric power generation amount prediction, or use of an average over a predetermined period, and options for such types can be set arbitrarily by a user. A data table created by the data table creation unit 2105a is converted by the display data generation unit 2105b, as described above, and is used in accordance with an intended use. In particular, a user-terminal display screen created by the display data generation unit 2105b is preferably converted into data that allows modifications of plan settings, and manual modifications of plan values, on a user-terminal screen.

As described above, the electric power generation amount first prediction unit 2101 and the electric power generation amount second prediction unit 2102 continue calculating electric power generation amount prediction values at pre-set intervals until a gate-closure time, and the latest electric power generation amount prediction values continue to be added to the electric power generation facility information DB 402. Accordingly, the plan creation unit 2105 acquires the latest electric power generation amount prediction values in accordance with a plan creation schedule, the data table creation unit 2105a creates a new data table, and the new data table is stored in the plan history DB 408. Creation of a new data table is performed at least on a plan creation schedule pre-set by a user, but is not limited thereto. In particular, in a case where the determination control unit 2110 issues an instruction for plan modifications for reasons such as market fluctuations, the plan creation unit 2105 may create a new data table in addition to the initially scheduled submission.

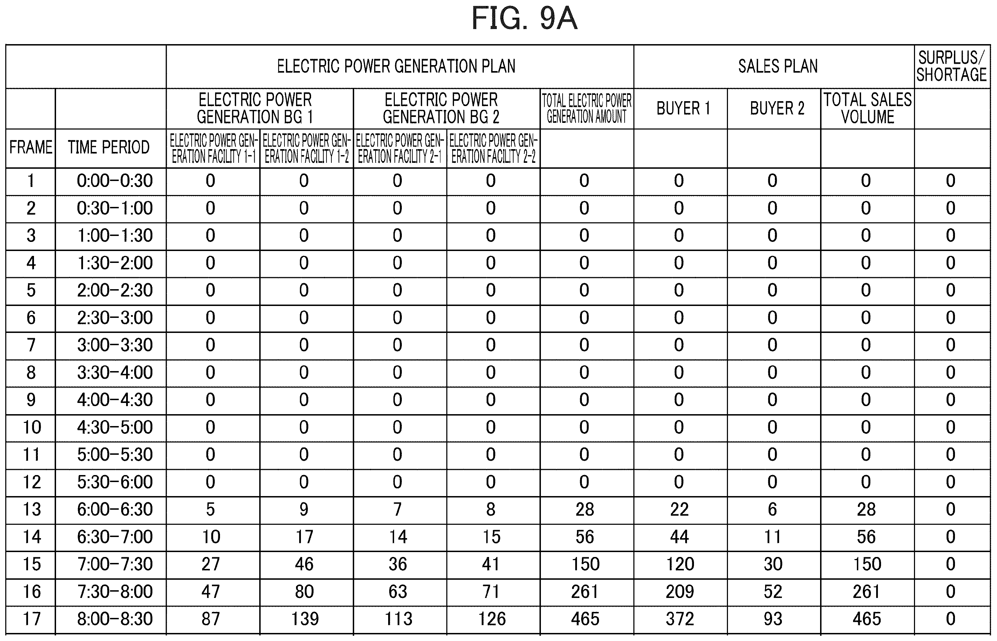

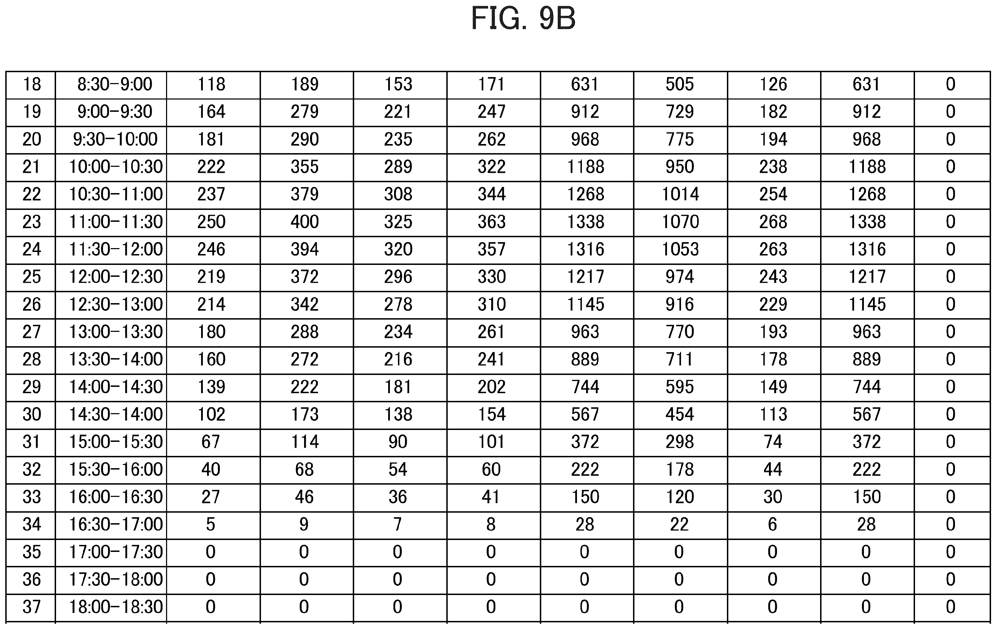

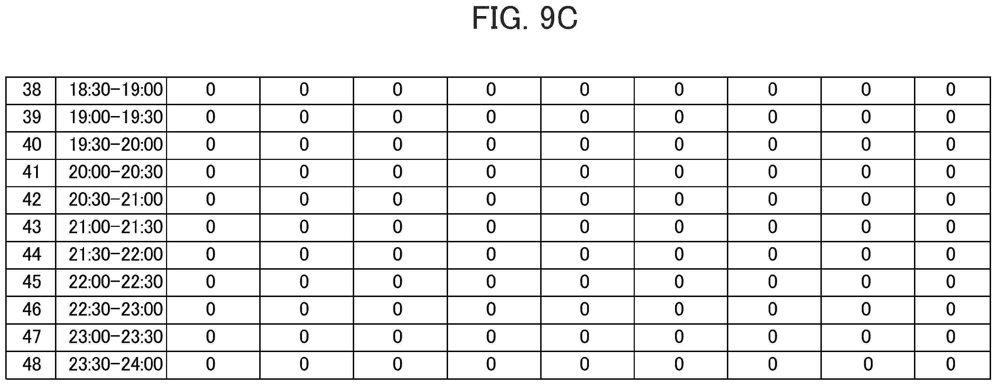

FIGS. 9A to 9C illustrate an example of a data table for a sales plan created, based on the electric power generation plan of FIGS. 8A to 8F, where FIG. 9A illustrates frames 1 to 17, FIG. 9B illustrates frames 18 to 37, and FIG. 9C illustrates frames 38 to 48, respectively. In the data tables of FIGS. 9A to 9C, in addition to the electric power generation BG 1 having the electric power generation facilities 1-1 and 1-2 of FIGS. 8A to 8F, an electric power generation plan that also includes the electric power generation BG 2 having the electric power generation facilities 2-1 and 2-2 is listed. In the sales plan of FIGS. 9A to 9C, a total of electric power generation amounts of the electric power generation BGs 1 and 2 is allocated to pre-set buyers 1 and 2; however, in a case where discharging from a storage battery owned as electric power for sale, or purchases from a retail electric power supplier, are present, such information may also be added to the data table. Buyers for electric power are prelisted in initial settings, the number of buyers to be added to the data table can be pre-set, and contents of allocation of electric power to respective buyers can also be pre-set. In the example of FIGS. 9A to 9C, buyer 1 is assumed to be JEPX, and buyer 2 is assumed to be a fixed-amount sale based on a bilateral contract to a retail electric power supplier, but other buyers such as supply as balancing capacity after gate-closure, and charging of owned storage equipment, can also be added. The sales plan also constitutes part of a next-day plan to be submitted to OCCTO by noon (12:00) on September 30, which is the day before an actual supply-and-demand date.

The electric power trading price prediction unit 2106 calculates future electric power trading price prediction values in an electric power trading market, and stores the prediction values in the electric power price information DB 405. In a case where a plurality of trading markets must be considered, such as a spot market, an intraday market, an Electric Power Reserve Exchange, and a capacity market, the electric power trading price prediction unit 2106 calculates trading price prediction values for each trading market. A prediction method for electric power trading prices is not particularly limited, and, for example, electric power trading prices in a market may be predicted by using, for a target area, past electric power trading price prediction values and actual data, weather information, calendar information, current affairs information, and wide-area reserve ratio information for electric power system use, or may alternatively be calculated using a learned model by means of these pieces of information and the past actual electric power trading price data as training data. Power trading markets may include the Japan Electric Power Exchange (JEPX), an Electric Power Reserve Exchange, a capacity market, and the like.

The electric power trading price prediction value acquisition unit 2107 acquires future electric power trading price prediction values in an electric power trading market from an institution outside the present plan creation system, and stores the prediction values in the electric power price information DB 405. Either the electric power trading price prediction unit 2106 or the electric power trading price prediction value acquisition unit 2107 may be included in the present plan creation system, or both may coexist.

The imbalance fee prediction unit 2108 calculates future surplus and shortage imbalance amounts, and imbalance fee prediction values, and stores the calculation results in the electric power price information DB 405. A prediction method for imbalance fee is not particularly limited, and, for example, imbalance fee may be predicted by using, for a target area, past actual information, weather information, calendar information, current affairs information, and wide-area reserve ratio information for electric power system use, or may be calculated by using a learned model that has learned relationships between these pieces of information and past actual imbalance fee data as training data.

The imbalance fee prediction value acquisition unit 2109 acquires future imbalance fee prediction values from an institution outside the present plan creation system, and stores the prediction values in the electric power price information DB 405. Either the imbalance fee prediction unit 2108 or the imbalance fee prediction value acquisition unit 2109 may be included in the present plan creation system, or both may coexist.

### [2.3 Plan Modification Functions]

A user can modify a created plan in response to weather information, electric power trading price prediction values, imbalance fee prediction values, and the like, which vary over time. Below, plan modification functions will be described by using, as an example, an electric power generation sales plan to be submitted to OCCTO.

The determination control unit 2110 determines, in accordance with a plan creation schedule pre-set by a user, or separately from the schedule, whether to modify an electric power generation sales plan or the like, and also determines whether plan modifications are to be performed by either the plan modification unit 2112 or the modification input unit 2111, which will be described later.

The plan creation unit 2105 automatically creates an electric power generation sales plan on a plan creation schedule pre-set by a user. However, situations can occur, such as unanticipated supply-and-demand fluctuations, in which execution of a created sales plan without change may greatly affect a user's revenue. In such a case, a new plan can be created by modifying an electric power generation sales plan or the like separately from a plan creation date and time pre-set by a user.

Examples of situations that can greatly affect a user's revenue include: i) in a case where an extent of variation, of an electric power generation amount prediction value calculated or acquired after creation of an electric power generation plan and/or an electric power sales plan, relative to an electric power generation amount prediction value acquired at a time of creating the electric power generation plan or the electric power sales plan, exceeds a pre-set threshold; ii) in a case where a change in an operation status of an electric power generation facility that occurs after creation of an electric power generation plan and/or an electric power sales plan corresponds to a pre-defined change; iii) in a case where a change in information on a wide-area reserve ratio corresponds to a pre-defined change; and iv) in a case where an extent of variation, of an electric power amount trading price in a market relative to a prediction value of an electric power amount trading price in the market that is calculated or acquired at a time of creating the electric power generation plan and/or the electric power sales plan, exceeds a pre-set threshold, but the examples are not limited thereto.

The determination control unit 2110 determines, within a time period during which plan modifications are permitted until a gate-closure time, whether further plan modifications are necessary, and whether plan modifications are to be automatic or manual. Here, modification conditions serving as a basis for determinations by the determination control unit 2110 are occurrences of the situations exemplified above, and the modification conditions can be set, as appropriate, based on circumstances of individual users. Modification conditions for an electric power generation sales plan are stored in the user information DB 406, and the determination control unit 2110 determines whether a plan modification is necessary, based on the modification conditions stored in the user information DB 406.

In a case where the determination control unit 2110 determines that a plan modification is necessary, the determination control unit 2110 outputs planmodification instruction information to the enablement selection unit 2113. The enablement selection unit 2113 enables the function of either the plan modification unit 2112 or the modification input unit 2111, based on a plan modification instruction from the determination control unit 2110. In a case where the number of modifications exceeds a pre-set limit determined by a user, or a gate-closure time has elapsed, or there is an instruction from the determination control unit 2110, the system may stop or disable the functions of the plan modification unit 2112 and/or the modification input unit 2111.

The plan modification unit 2112 acquires a modification instruction from the determination control unit 2110, acquires the latest electric power generation sales plans that a plan creation unit 2105 has created, automatically modifies an electric power generation sales plan to the latest electric power generation sales plan, and stores modified electric power generation plan values and data related to a modified plan in the plan history DB 408. Modified electric power generation plan values and sales plan values (amounts of electric energy to be sold to respective buyers) of modified plans stored in the plan history DB 408 may be used in the future as training data when the plan creation unit 2105 creates or modifies an electric power generation sales plan.

The modification input unit 2111 acquires an instruction from the determination control unit 2110, and accepts manual inputs by a user for an electric power generation sales plan. Manual inputs may be prohibited or disabled for plans after a gate-closure time, and a limit on the number of modifications can be set. The system may specify that the manually modified values are not allowed to be automatically modified. Restrictions on such modifications can be pre-set by a user, and the setting is stored in the user information DB 406.

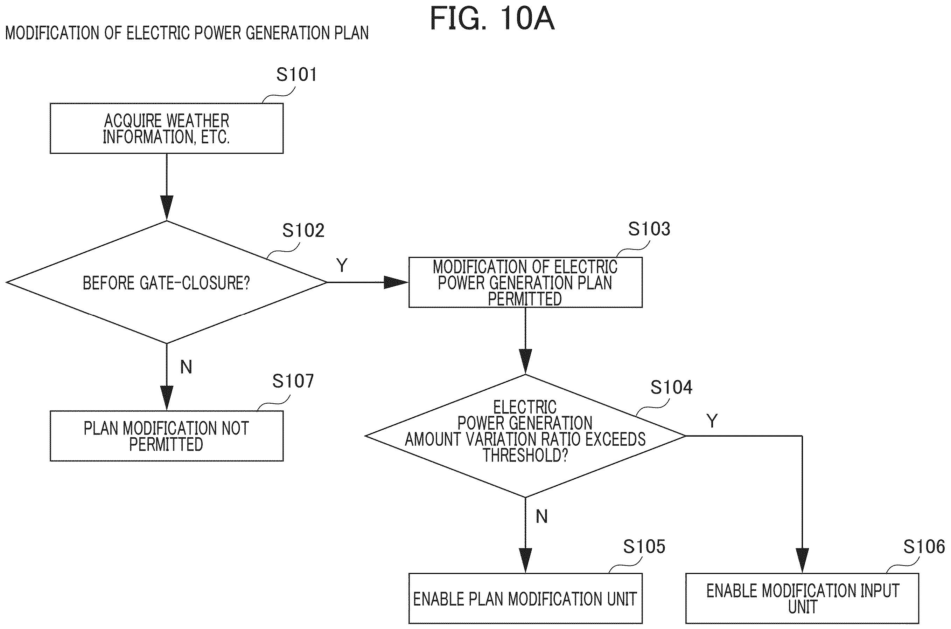

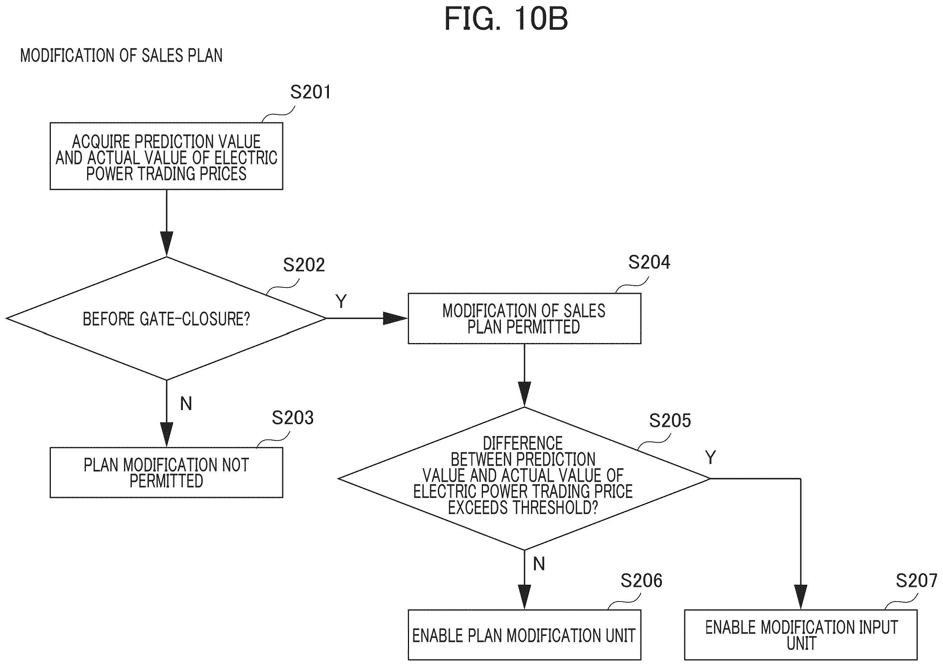

FIGS. 10A and 10B are flowcharts illustrating a decision process when modifying an electric power generation sales plan created on a plan creation schedule, and illustrate an example of "i) in a case where an extent of variation, of an electric power generation amount prediction value acquired after creation of an electric power generation plan and/or an electric power sales plan, relative to an electric power generation amount prediction value acquired at a time of creating the electric power generation plan or the electric power sales plan, exceeds a pre-set threshold".

FIG. 10A is a flowchart at a time of modifying an electric power generation plan. In the example of FIG. 10A, a user sets that, in a case where a new electric power generation amount prediction value varies, relative to an electric power generation amount prediction value before modification, by a ratio exceeding a predetermined threshold range, a mode is switched to manual modifications. That is, the plan creation unit 2105 automatically creates a new plan in accordance with a plan creation schedule of the user, but, by a determination of the determination control unit 2110, automatic plan creation is stopped, manual plan modification input is enabled, and the user is requested to make modifications.

The acquisition unit 2104 acquires weather information, current affairs information, wide-area reserve ratio information for electric power system use, electric power market information, and the like, via the network NW (S101). The determination control unit 2110 determines whether a frame, for which a plan modification is under consideration, is before gate-closure, and, in a case where the frame is after gate-closure (S102: No), the determination control unit 2110 determines that a plan modification is not permitted. In a case where the frame, for which a plan modification is under consideration, is before gate-closure (S102: Yes), the determination control unit 2110 determines that a modification of an electric power generation plan is permitted (S103). However, at this point, a modified plan is not automatically created. In a case where the latest electric power generation amount prediction value does not exceed a predetermined threshold relative to an electric power generation amount prediction value before modification (S104: No), the determination control unit 2110 outputs to the enablement selection unit 2113 an instruction for automatic modifications, and the enablement selection unit 2113 enables the plan modification unit 2112. The plan creation unit 2105 creates a new plan, the plan modification unit 2112 updates a plan to the new plan, and the plan modification unit 2112 stores the plan in the plan history DB 408. In a case where an electric power generation amount prediction value, based on newly obtained information, exceeds a predetermined threshold relative to an electric power generation amount prediction value before modification (S104: Yes), the determination control unit 2110 outputs to the enablement selection unit 2113 an instruction for manual modifications, and the enablement selection unit 2113 enables the modification input unit 2111. The determination control unit 2110 may be configured to issue an alert to a user requesting manual plan modifications.

In the example of FIG. 10A above, switching conditions to manual modifications are that the difference, between the latest electric power generation amount prediction value and the electric power generation amount prediction value immediately before the latest value, exceed a predetermined threshold, but the conditions are not limited to this example. For example, in a case where an electric power trading price shows a variation exceeding a certain level, or in a case where wide-area reserve ratio information indicating tightness of electric power is obtained, or in a case where current affairs information such as stoppage of an electric power generation facility is obtained, a future large-scale market fluctuation can be regarded as likely. Switching conditions from automatic modifications to manual modifications can be set arbitrarily by a user. In a case where the latest electric power generation amount prediction value is larger than the electric power generation amount prediction value acquired at a time of creating an electric power generation sales plan, a comparison may be made between a trading price in an intraday market and a surplus imbalance fee, and, in a case where a surplus imbalance fee is high, an additional condition may be adopted under which the determination control unit 2110 determines that a plan modification is unnecessary.

FIG. 10B is a flowchart at a time of modifying a sales plan. In FIG. 10B, a user sets that, in a case where a difference (including an absolute value or a rate of increase or decrease) between an electric power trading price prediction value used for creating the latest sales plan and an actual electric power trading price exceeds a predetermined threshold, a mode is switched to manual modifications. The determination control unit 2110 acquires, from the buy-and-sell transaction information DB 407, the latest actual electric power trading price and an electric power trading price prediction value that was used for creating the latest sales plan (S201). The determination control unit 2110 determines whether a frame for which a plan modification is under consideration is before gate-closure, and, in a case where the frame is after gate-closure (S202: No), the determination control unit 2110 determines that a plan modification is not permitted (S203). In a case where a frame for which a plan modification is under consideration is before gate-closure (S202: Yes), the determination control unit determines that a modification of a sales plan is permitted (S204). However, at this point, a modified plan is not automatically created. A difference between an electric power trading price prediction value used for the latest sales plan and an actual electric power trading price is calculated and compared, and, in a case where the difference exceeds a pre-set threshold (S205: Yes), the determination control unit 2110 outputs an instruction to the enablement selection unit 2113 to enable the modification input unit 2111, and the enablement selection unit 2113 enables the modification input unit 2111. The determination control unit 2110 may be configured to issue an alert to a user requesting manual plan modifications. In a case where a difference between an electric power trading price prediction value used for the latest sales plan and an actual electric power trading price does not exceed a pre-set threshold (S205: No), the determination control unit 2110 outputs to the enablement selection unit 2113 an instruction to enable the plan modification unit 2112, and the enablement selection unit 2113 enables the plan modification unit 2112. However, when modifying a sales plan, modifications must be consistent with values of an electric power generation plan.

### [2.4 Plan Execution Functions]

The buy-and-sell transaction processing unit 2115, in a case where electric power buy-and-sell transactions are conducted, based on a created electric power generation sales plan, calculates actual electric power sales amounts and electric power sales revenue, and saves the values as actual electric power buy-and-sell transaction data in the buy-and-sell transaction information DB 407. An electric power sales amount is acquired, by data communication with an electric power producer or a general transmission and distribution utility, as an amount of electric energy actually generated and transmitted for each electric power generation facility. Electric power sales revenue can be calculated by multiplying the transmitted electric energy by a final transaction price with a buyer saved in the buy-and-sell transaction information DB 407. The actual electric power buy-and-sell transaction data may include various expenses incurred in electric power buy-and-sell transactions including imbalance fee, and may also include revenue data such as operating profit and gross profit from electric power buy-and-sell transactions. In calculation of revenue data, electric power generation cost information and the like saved in the user information DB 406 are referenced. The actual electric power buy-and-sell transaction data saved in the buy-and-sell transaction information DB 407 may be used as training data when the plan creation unit 2105 creates a future electric power generation sales plan.

The plan control unit 2114 performs various types of processing accompanying a plan that the plan creation unit 2105 has created. For example, in response to a user's request, the plan control unit performs submission of a created electric power generation sales plan to OCCTO and to a retail electric power supplier or the like, execution of bidding for trading in JEPX, an Electric Power Reserve Exchange, a capacity market and the like, processing based on user inputs for plan modifications, storage of those data in the plan history DB 408, and display of plan data for display on a user-terminal screen. Furthermore, the plan control unit 2114 can perform simulations of past or future revenue, based on a created electric power generation sales plan. For example, when reflecting on past transactions, analysis can be performed in cases where a past average value was modified to a prediction value by a learned model as an electric power generation amount prediction value, a risk tolerance of an electric power generation amount prediction value was modified, or a buyer was changed, and, in order to check future trends of buy-and-sell predictions, analysis of buy-and-sell predictions when respective conditions are modified can also be performed.

### EXAMPLES

Specific embodiments of the electric power plan creation system of the present invention will be described below.

### [Embodiment 1: Creation of an electric power generation sales plan]

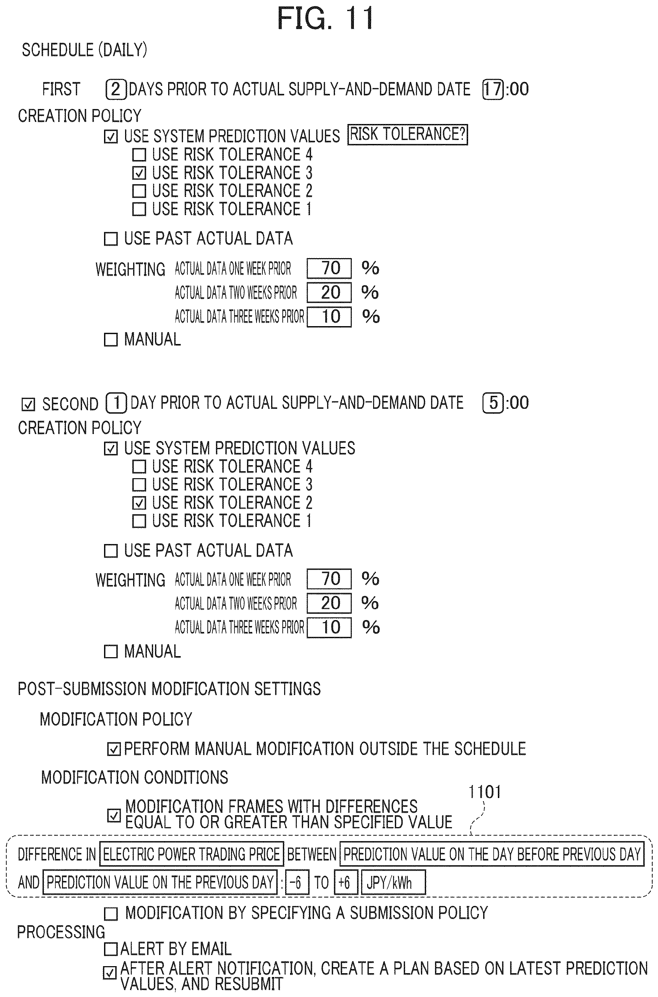

A user sets conditions for an electric power generation plan and a sales plan on an initial settings screen. FIG. 11 is an example of an initial settings screen for an electric power generation plan. An electric power generation plan is scheduled such that a first plan is created at 5:00 p.m. two days before an actual supply-and-demand date, and a second plan is created at 5:00 a.m. on the previous day. Dates and times for plan creation can be modified arbitrarily on the initial screen.

As a creation policy, a user can select automatic calculation by a learned model, automatic calculation using past actual data, or manual input, for calculation of electric power generation amount prediction values, and, in a case where a learned model is used, one of four risk tolerances, similar to the example in FIG. 6, considering risks of surplus imbalance and shortage imbalance, can be selected. In the present embodiment, the user has selected system prediction values, which are automatic calculation by a learned model, and set a risk tolerance to 3. The content of a risk tolerance can be specified to be displayed by, for example, pressing a "Risk Tolerance?" button by a mouse. In a case where automatic calculation using past actual data is used, weighting for past actual value to be used can be specified.

A user sets a modification policy and modification conditions for a submission plan. In the present embodiment, as a modification policy, the user selects whether to perform manual plan modifications in a case where an event that can affect the user's revenue occurs even outside a plan creation schedule pre-set in advance. In the example of FIG. 11, a plan is manually modified in such a case.

Next, a user sets conditions for a case where modifications are performed. In the example of FIG. 11, as a post-submission modification policy, "modify frames with differences equal to or greater than a specified value" or "modify by specifying a submission policy" can be selected. Here, "modify frames with differences equal to or greater than a specified value" is a policy in which, in a case where electric power generation amount prediction values or trading price variations calculated at fixed intervals vary by at least a certain ratio compared to values in a reference frame, automatic plan updating is stopped, and a mode is switched to manual, and "modify by specifying a submission policy" can be arbitrarily set by a user, for example, in a case where current affairs information such as stoppage of an electric power generation facility is acquired. In the present embodiment, the user has specified "modify frames with differences equal to or greater than a specified value", and set that, in a case where an electric power trading price in a market varies by 6 JPY/kWh or more relative to a prediction value on the day before the previous day, an alert is displayed, a mode is switched to manual modifications, and an electric power generation plan is recreated. Selectable items, "electric power trading price", "prediction value on the day before the previous day", "prediction value on the previous day", "-6", "+6", and "JPY/kWh", which are written in a box 1101 for setting modification conditions, are also specified to be selectable by a pull-down method or the like, from a plurality of pre-registered items, and, for example, a selection can be set to "a difference in generation amount between a prediction value on the day before the previous day and a prediction value on the previous day is -15 to +0%".

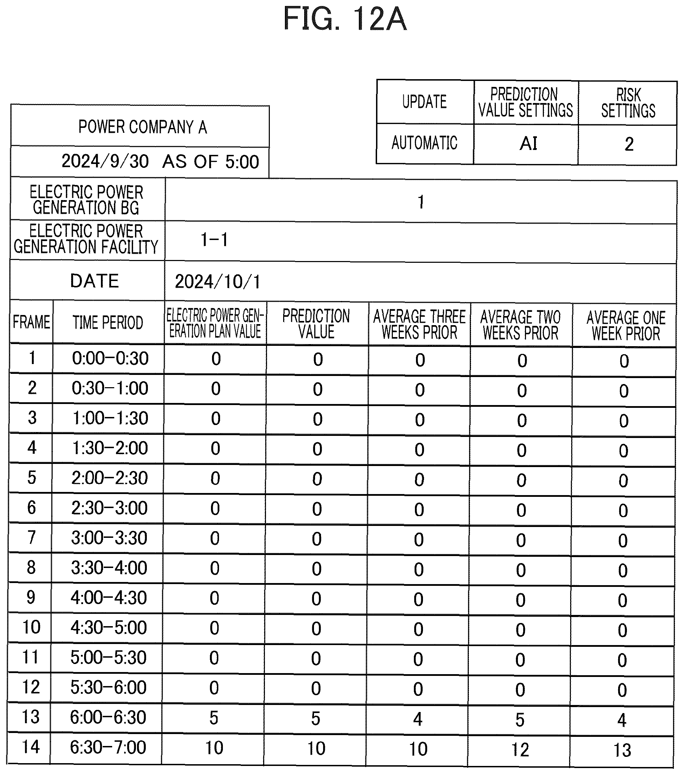

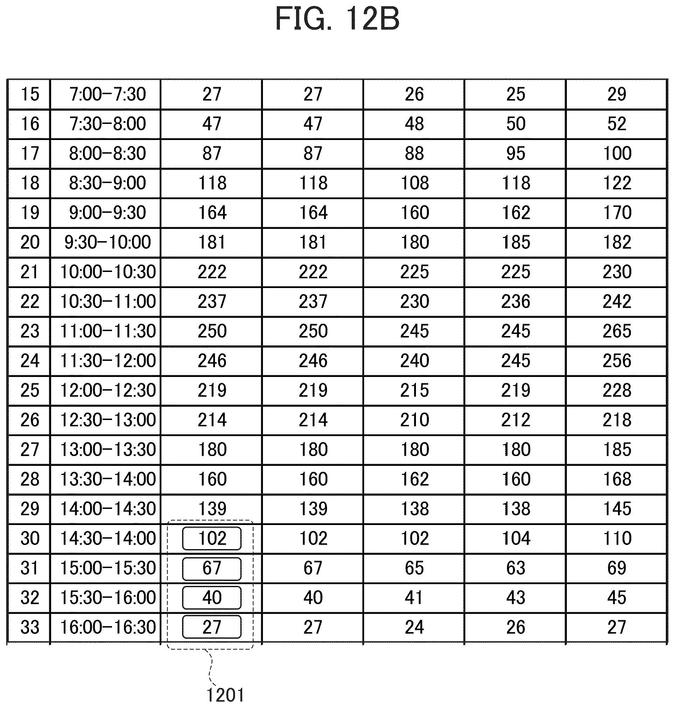

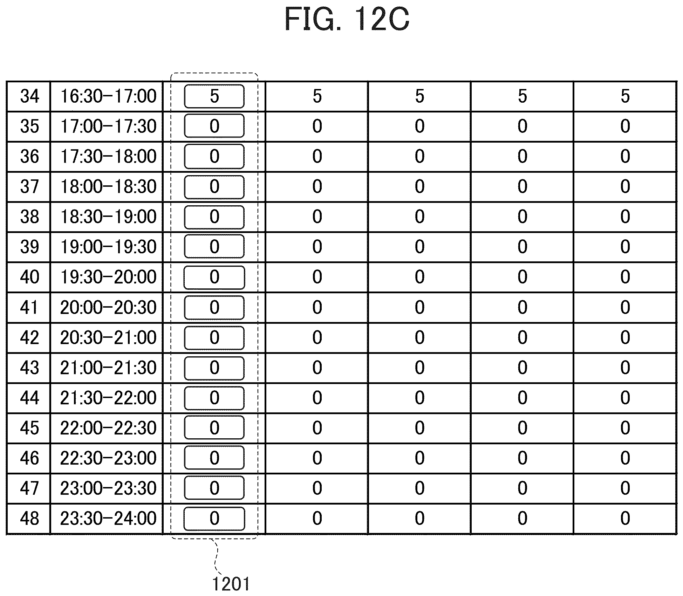

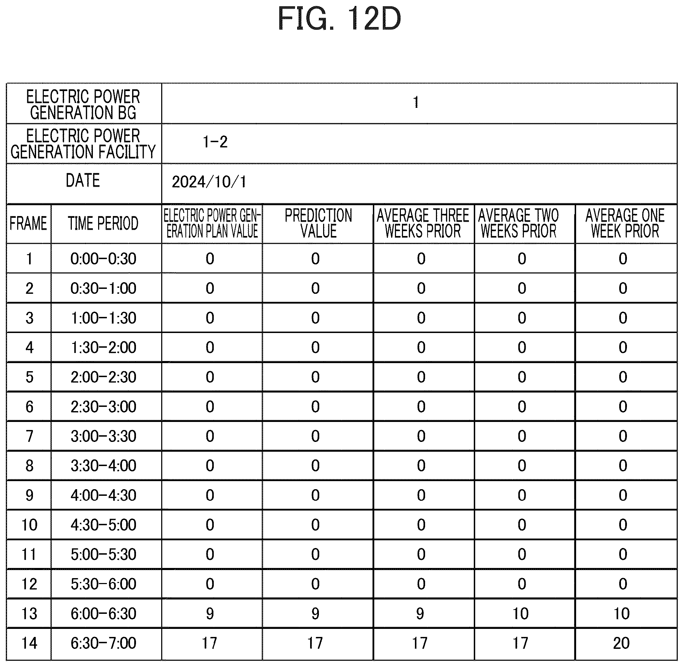

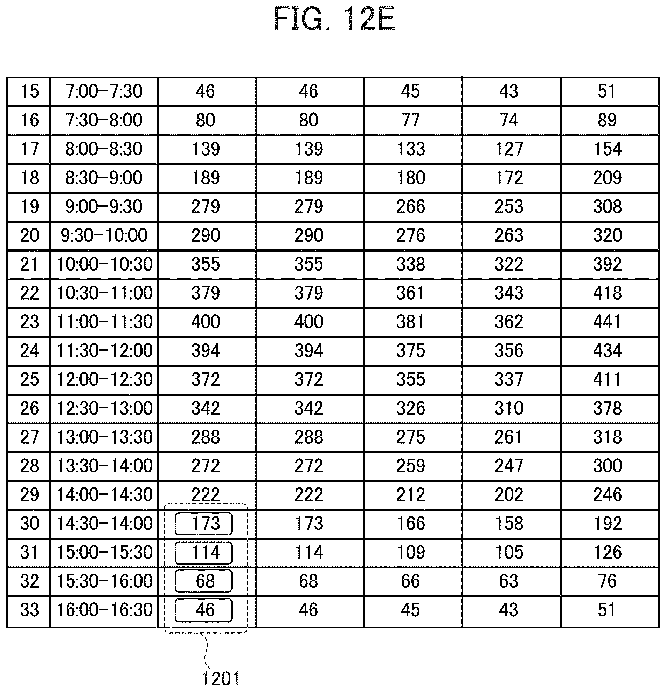

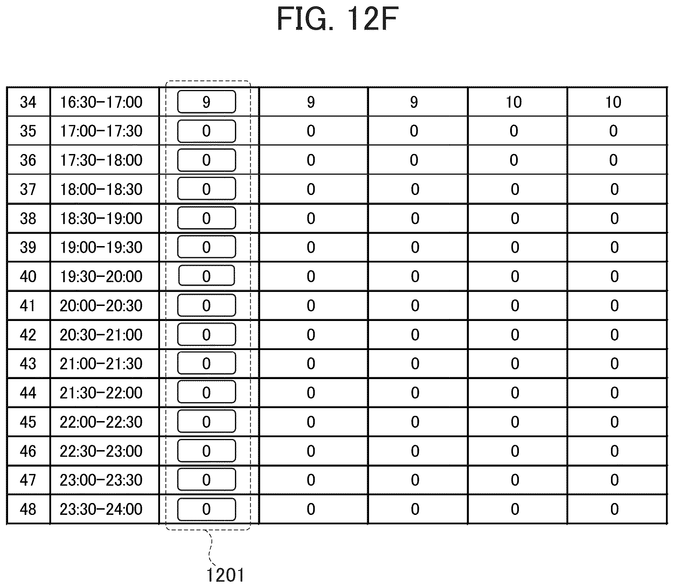

FIGS. 12A to 12F are examples of display screens of an electric power generation plan as of 1:30 p.m. on September 30, where FIG. 12A illustrates frames 1 to 14 for the electric power generation facility 1-1, FIG. 12B illustrates frames 15 to 33, FIG. 12C illustrates frames 34 to 48, FIG. 12D illustrates frames 1 to 14 for the electric power generation facility 1-2, FIG. 12E illustrates frames 15 to 33, and FIG. 12F illustrates frames 34 to 48 for the electric power generation facility 1-2, respectively. A display screen of an electric power generation plan is the data table of FIGS. 8A to 8F that the display data generation unit 2105b has processed for user-screen display. On the screen, a user name, a plan creation time (5:00 in FIG. 12A), a mode of updates, prediction value settings, and a tolerance at a time of calculating prediction values can be viewed in a list. In FIGS. 12A to 12F, electric power generation plans of the electric power generation facilities 1-1 and 1-2 of the BG 1 are displayed side by side, but a page layout can be set arbitrarily by a user.

In FIGS. 12B to 12C and 12E to 12F, boxes 1201 are attached to electric power generation plan values for frame 30 and subsequent frames, and the boxes indicate parts that can be modified before gate-closure. That is, frames 1 to 29 are after gate-closure, and therefore modifications are not permitted, and prediction values are not updated. For modifiable boxes of frame 30 and subsequent frames, either manual or automatic modifications are permitted until gate-closure. In a case where a user manually modifies a value for a modifiable box, the plan control unit 2114 stores the modified plan in the plan history DB 408.

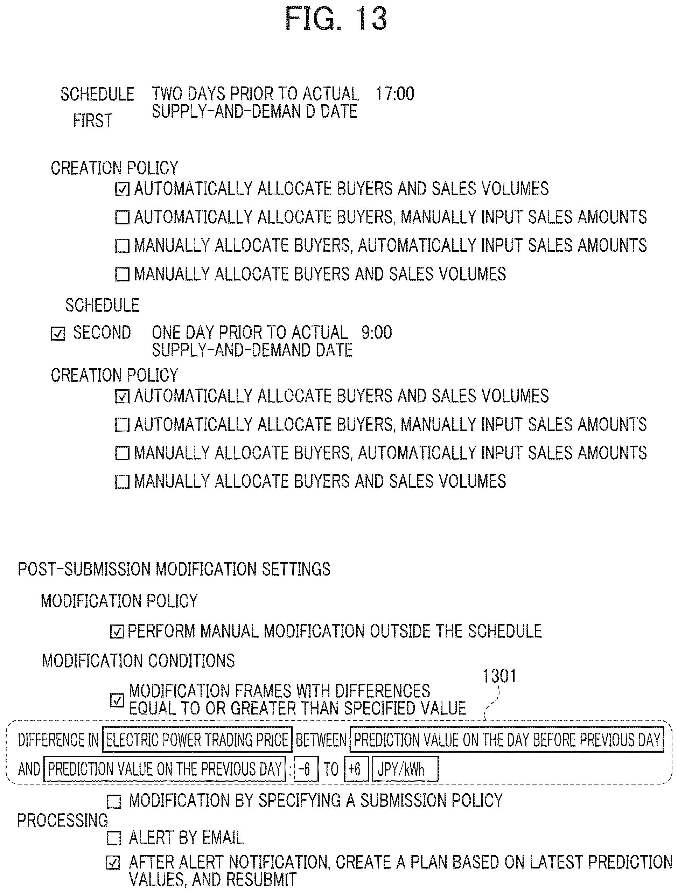

FIG. 13 is an example of an initial settings screen for a sales plan. A sales plan is scheduled similar to an electric power generation plan such that a first plan is created at 5:00 p.m. two days before an actual supply-and-demand date, and a second plan is created at 5:00 a.m. on the previous day. Dates and times for plan creation can be modified arbitrarily on the initial screen similar to an electric power generation plan. In the example of FIG. 13, allocation of buyers for generated electric power can be selected. In the example of FIG. 13, check marks are set for a setting in which buyers and sales volumes to respective buyers are calculated automatically, but either buyers or sales volumes can be made manual. Buyers are pre-registered in the system, and information on electric power prices of the buyers is periodically acquired by the acquisition unit 2104 until gate-closure.

In the example of FIG. 13 as well, similar to FIG. 11, a user sets a modification policy for a submission plan and modification conditions. In the present embodiment, as a modification policy, the user selects whether to perform manual plan modifications in a case where an event that can affect the user's revenue occurs even outside a plan creation schedule pre-set in advance. In the example of FIG. 13, a plan is manually modified.

Next, a user sets conditions for a case where modifications are performed. Similarly to the electric power generation plan in FIG. 11, parameters in a box 1301 can be modified as modification conditions in the example of FIG. 13. In the example of FIG. 13, "modify frames with differences equal to or greater than a specified value" is a policy in which, in a case where variations in an electric power trading price in each frame vary by at least a certain ratio compared to a value in a reference frame, automatic plan updating is stopped, and a mode is switched to manual, and "modify by specifying a submission policy" is similar to FIG. 11, and therefore description thereof is omitted. In the present embodiment, similar to the electric power generation plan, a setting was adopted in which, in a case where a market actual electric power trading price varies by 6 JPY/kWh or more relative to a prediction value on the previous day, an alert is displayed, and a mode is switched to manual modifications.

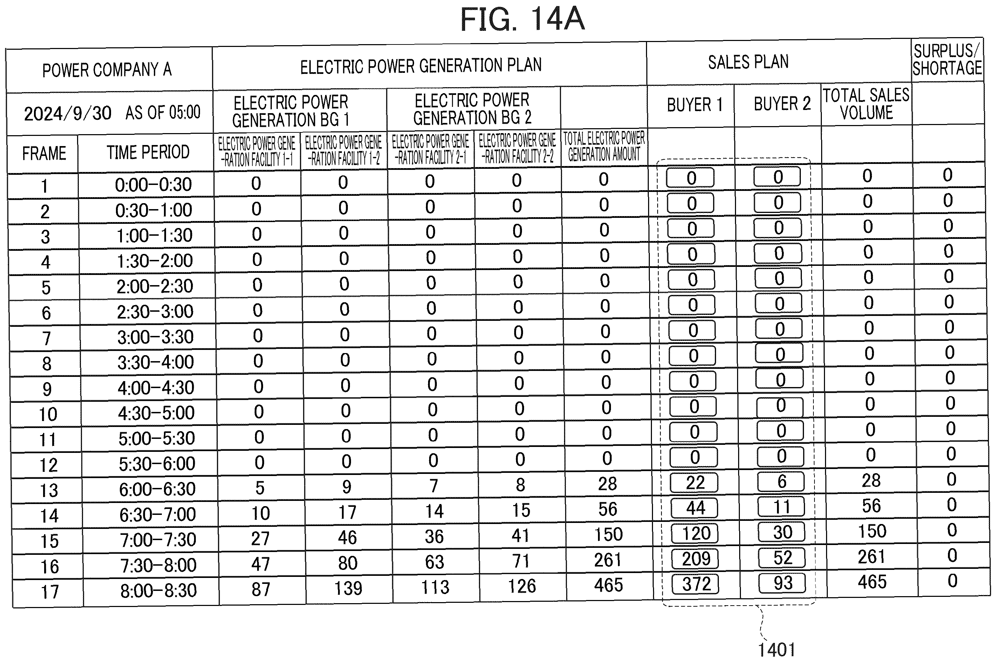

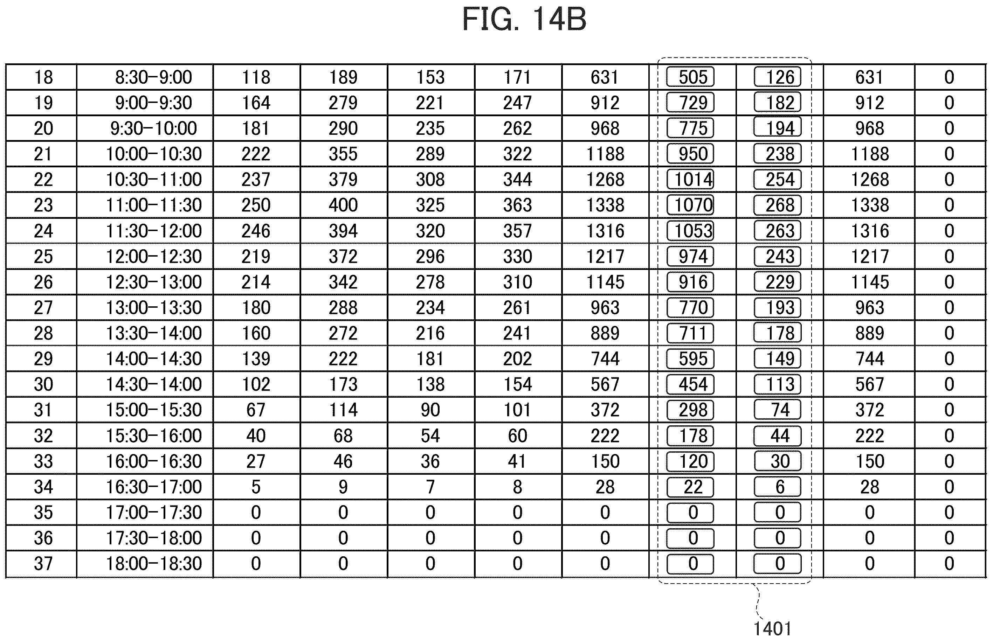

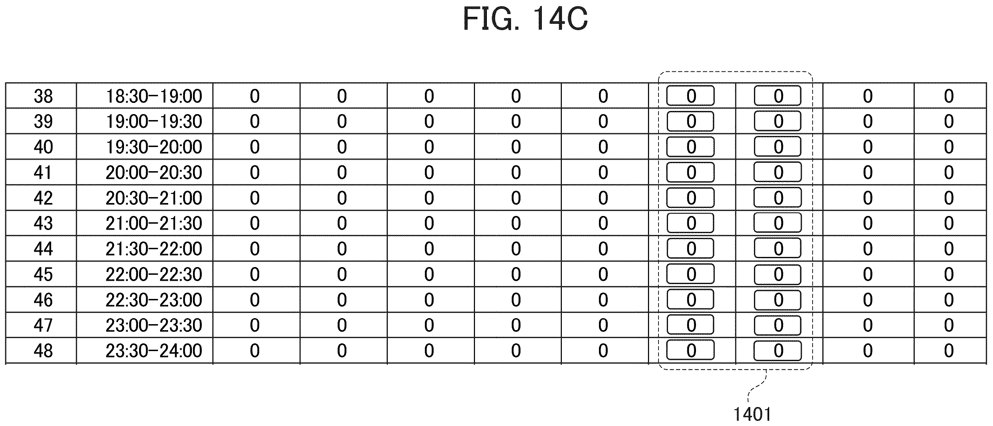

FIGS. 14A to 14C are examples of display screens of a sales plan as of 11:00 a.m. on September 30, where FIG. 14A illustrates frames 1 to 17, FIG. 14B illustrates frames 18 to 37, and FIG. 14C illustrates frames 38 to 48, respectively. A display screen of a sales plan is the data table of FIGS. 9A to 9C that the display data generation unit 2105b has processed for user-screen display. On the screen, in addition to a user name and a plan creation time (5:00 in FIGS. 12A to 12F), electric energy to be sold to buyers 1 and 2 when allocating a total of electric power generated from electric power generation BG 1 and generation BG 2, which are owned by the user, can be viewed. The display content of a sales plan is not limited to the examples of FIGS. 14A to 14C, and the system may specify that an electric power trading price and a user's revenue from electric power sales can be checked. In FIGS. 14A to 14C, electric power generation plans and sales plans are specified to be displayed simultaneously, but a layout such as a confirmation display of only a sales plan can be set arbitrarily by a user.

In FIGS. 14A to 14C, boxes 1401 are attached to sales plan values for all frames, and the boxes indicate parts that can be modified before gate-closure. For modifiable boxes, either manual or automatic modifications are permitted until gate-closure. In a case where a user manually modifies a plan value for a modifiable box, the plan control unit 2114 stores the modified plan value in the plan history DB 408.

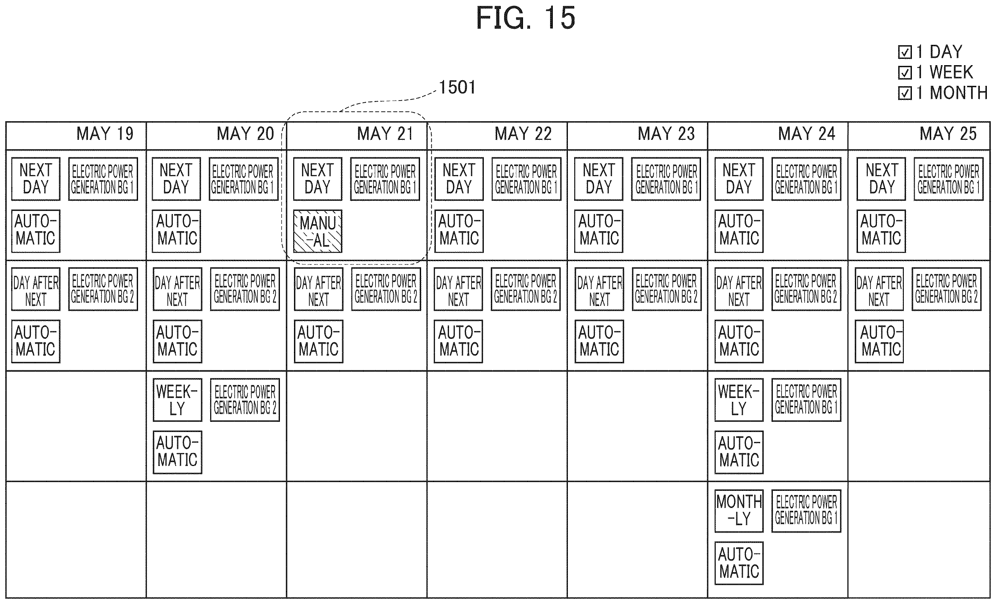

FIG. 15 is an example of a list screen of submission schedules of electric power generation sales plans created by the plan creation unit 2105 (display data generation unit 2105b). A user can understand from this list screen contents of electric power generation sales plans to be submitted within a prescribed period. In the example of FIG. 15, a schedule for one week is illustrated, and each box shows a name of an electric power generation BG, a type of plan, and whether updates are automatic or manual, but display content can be set arbitrarily by a user, and a period of a schedule to be displayed on the screen can be set arbitrarily to, for example, daily or monthly. In FIG. 15, plans are divided by BG, but division by electric power generation facility or by a group set by a user is also possible.

Links to browsing or modification screens of electric power generation sales plans are attached to the schedule list screen of FIG. 15, and clicking each cell 1501 moves to a page that displays an electric power generation sales plan such as in FIGS. 12A to 12F or FIGS. 14A to 14C. Pressing a button "Auto" or "Manual" switches plan modification settings between automatic and manual.

### [Embodiment 2: Modification of an electric power generation sales plan]

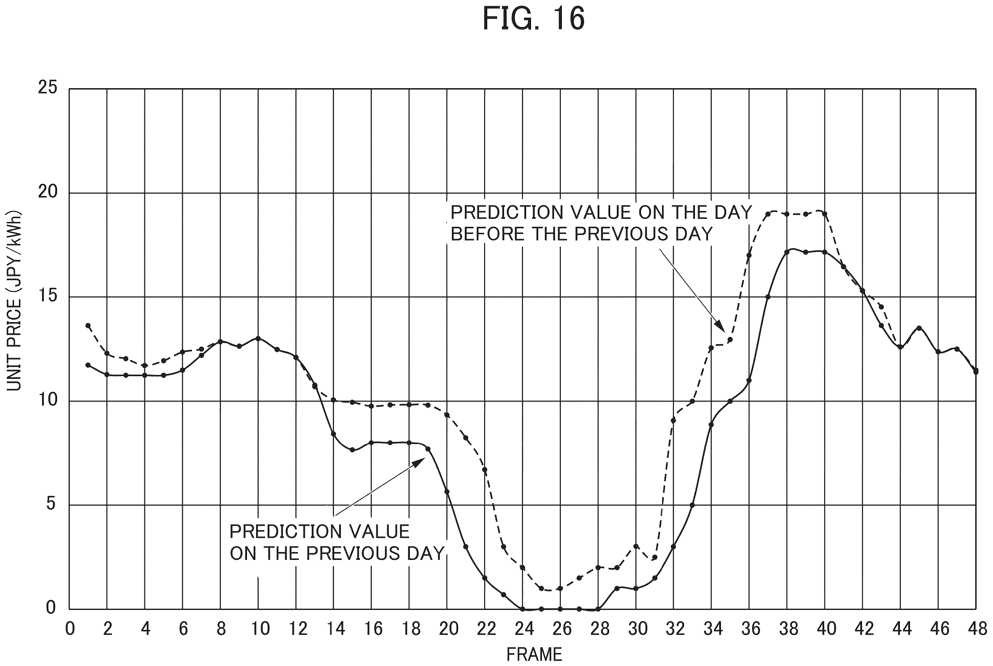

Modification of an electric power generation sales plan will be described. FIG. 16 is an example of a graph, displayed by the present plan creation system, of spot market prices in a specific area on JEPX on a specific day. The broken line is an electric power trading price prediction value that was predicted on the day before the previous day of the actual supply-and-demand date (a prediction value on the day before the previous day), and a solid line is an electric power trading price prediction value that was predicted on the previous day (a prediction value on the previous day). For example, at frame 17 (8:00 a.m. to 8:30 a.m.), the prediction value on the day before the previous day was approximately 10 JPY, and the prediction value on the previous day was approximately 8 JPY. A difference between the two values is within a threshold of 6 JPY pre-set by a user, and therefore switching to manual modifications was not performed, and an electric power generation plan was modified automatically based on these prediction values. For subsequent frames as well, plan modifications were performed automatically.

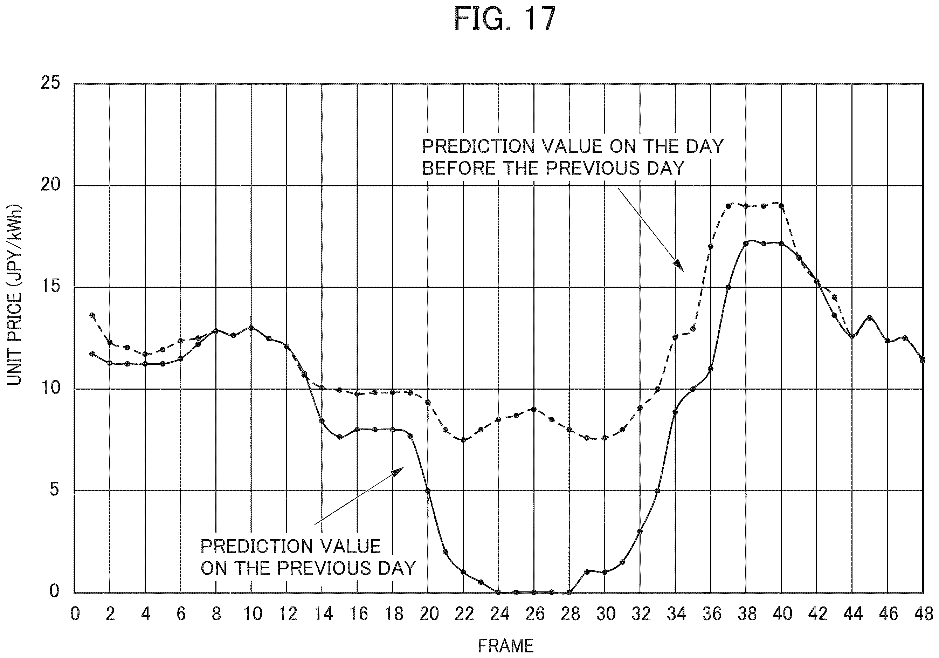

Modification of a sales plan will be described. FIG. 17 is a graph illustrating spot market prices in a specific area on JEPX on a different day, where the broken line is an electric power trading price prediction value that was calculated on the day before the previous day of the actual supply-and-demand date (a prediction value on the day before the previous day), and a solid line is an electric power trading price prediction value that was predicted on the previous day (a prediction value on the previous day). On this day, weather was poor and an increase in daytime solar power generation had been predicted as unlikely, but improvement in weather was reported by the latest weather information immediately before actual supply and demand, and there arose a possibility that electric power supply would exceed demand contrary to an initial prediction, and output curtailment would be implemented. For example, at frame 26 (12:30 p.m. to 1:00 p.m.), the prediction value on the day before the previous day was approximately 9 JPY, whereas the prediction value on the previous day at the same time was approximately 0.01 JPY. A difference between the two values is over a threshold of 6 JPY pre-set by a user, and therefore the determination control unit 2110 issued an alert to the user and instructed a modification by manual updates.

A user that received the alert created a new sales plan that increased a sales volume to a retail electric power supplier having a fixed trading price, in order to maximize revenue, or that took into account time-shifting of sales by using a storage battery.

An embodiment of the present invention has been described above, but the present invention is not limited to the embodiment described above, and modifications and improvements within a scope capable of achieving objectives of the present invention are included in the present invention.

For example, a series of processing operations described above can be executed by hardware, or can be executed by software. In other words, the functional configuration of FIG. 3 is merely illustrative, and is not particularly limited. That is, as long as a function capable of executing a series of processing operations described above as a whole is provided in the present plan creation system, a choice of functional blocks used to realize the function is not limited to the example of FIG. 3. Existence locations of functional blocks and databases are also not particularly limited to FIG. 3, and can be arbitrary. For example, at least part of functional blocks and databases necessary to execute various types of processing can be transferred to a user terminal. Conversely, functional blocks and databases of a user terminal can be transferred to a server. A single functional block can be constituted by hardware alone, by software alone, or by a combination thereof.

In a case where a series of processing operations is executed by software, a program that constitutes the software can be installed in a computer or the like from a network or a recording medium, or a program installed in an external computer can be used by access via a network. A computer may be a computer embedded in dedicated hardware. A computer may be a server capable of executing various types of functions by installing various types of programs, or may alternatively be a generalpurpose smartphone or a personal computer.

A recording medium including such a program is configured not only by a removable medium, which is not illustrated, that is distributed separately from a device main body to provide a program to a user or the like, but also by a recording medium that is provided to a user or the like, in a state in which the recording medium is pre-incorporated in the device main body.

In the present specification, steps describing programs recorded in a recording medium include not only processing that is performed chronologically in accordance with the order, but also processing that is not necessarily processed chronologically, and processing that is executed in parallel or individually. In the present specification, the term "system" means an overall device configured from a plurality of devices, a plurality of means, and the like.

### EXPLANATION OF REFERENCE NUMERALS

1: management server
2: user-side server
3: external institution server
210: control unit
220: input device
230: storage device
240: display device
250: communication device
260: output device
401: weather information DB
402: electric power generation facility information DB
403: current affairs information DB
404: electric power system information DB
405: electric power price information DB
406: user information DB
407: buy-and-sell transaction information DB
408: plan history DB
2101: electric power generation amount first prediction unit
2102: electric power generation amount second prediction unit
2103: type selection unit
2104: acquisition unit
2105: plan creation unit
2105a: data table creation unit
2105b: display data generation unit
2105c: output data generation unit
2106: electric power trading price prediction unit
2107: electric power trading price prediction value acquisition unit
2108: imbalance fee prediction unit
2109: imbalance fee prediction value acquisition unit
2110: determination control unit
2111: modification input unit
2112: plan modification unit
2113: enablement selection unit
2114: plan control unit
2115: buy-and-sell transaction processing unit

## Claims

1. An electric power plan creation system, comprising:
a type selection unit configured to select one of a plurality of electric power generation amount prediction types;
a plan creation unit configured to create an electric power generation plan and/or an electric power sales plan, based on an electric power generation amount prediction value corresponding to the selected electric power generation amount prediction type;
a determination control unit configured to determine whether prescribed conditions are satisfied by the electric power generation plan and/or the electric power sales plan, and to output modification instruction information for manual or automatic modification of the created electric power generation plan and/or the created electric power sales plan in a case where the prescribed conditions are determined to be satisfied by the electric power generation plan and/or the electric power sales plan; and
a plan modification unit configured to receive the modification instruction information, and to automatically modify the electric power generation plan and/or the electric power sales plan.

2. The electric power plan creation system according to claim 1,
wherein the plurality of electric power generation amount prediction types include a value calculated based on an electric power generation amount prediction value, a maximum value of the electric power generation amount prediction value, a minimum value of the electric power generation amount prediction value, and/or an average of electric power generation amount prediction values, or a value calculated based on past actual electric power generation amount value.

3. The electric power plan creation system according to claim 1,
wherein the prescribed conditions include at least one selected from the following i) to iv):
i) an extent of variation, of an electric power generation amount prediction value acquired after creation of the electric power generation plan and/or the electric power sales plan, relative to an electric power generation amount prediction value calculated or acquired at a time of creating the electric power generation plan and/or the electric power sales plan, exceeds a pre-set threshold;
ii) a change in an operation status of an electric power generation facility that occurs after creation of the electric power generation plan and/or the electric power sales plan corresponds to a pre-defined change;
iii) a change in wide-area reserve ratio information corresponds to a pre-defined change; or
iv) an extent of variation, of an electric power trading price in a market, relative to an electric power trading price prediction value in the market that is calculated or acquired at a time of creating the electric power generation plan and/or the electric power sales plan, exceeds a pre-set threshold.

4. The electric power plan creation system according to claim 1, further comprising:
an acquisition unit configured to acquire information including an electric power generation amount prediction value corresponding to the selected electric power generation amount prediction type,
wherein the plan creation unit creates the electric power generation plan and/or the electric power sales plan, based on the acquired electric power generation amount prediction value.

5. The electric power plan creation system according to claim 1, further comprising:
an electric power generation amount first prediction unit configured to calculate an electric power generation amount prediction value by using a learned model trained with past electric power generation amount prediction values and actual electric power generation amount data as training data,
wherein the plan creation unit creates the electric power generation plan and/or the electric power sales plan, based on the electric power generation amount prediction value calculated by the electric power generation amount first prediction unit.

6. The electric power plan creation system according to claim 1, further comprising:
an acquisition unit configured to periodically acquire information including weather forecast data and actual electric power generation amount value from an electric power generation facility;
a storage device configured to store information including actual electric power generation amount value, electric power generation capacity, and an installation location of the electric power generation facility; and
an electric power generation amount second prediction unit configured to calculate an electric power generation amount prediction value, based on at least the latest weather forecast data and information including the actual electric power generation amount, the electric power generation capacity, and the installation location of the electric power generation facility,
wherein the plan creation unit creates the electric power generation plan and/or the electric power sales plan, based on the electric power generation amount prediction value calculated by the electric power generation amount second prediction unit.

7. The electric power plan creation system according to claim 1,
wherein the plan creation unit creates the electric power generation plan and/or the electric power sales plan, based on information including the electric power generation amount prediction value, a future electric power trading price prediction value in an electric power trading market, and a future imbalance fee prediction value.

8. The electric power plan creation system according to claim 1, further comprising:
an electric power trading price prediction value acquisition unit configured to acquire a future electric power trading price prediction value; and
an imbalance fee prediction value acquisition unit configured to acquire a future imbalance fee prediction value,
wherein the plan creation unit creates the electric power generation plan and/or the electric power sales plan, based on information including the electric power generation amount prediction value, the acquired electric power trading price prediction value, and an acquired imbalance fee prediction value.

9. The electric power plan creation system according to claim 1, further comprising:
an electric power trading price prediction unit configured to calculate a future electric power trading price prediction value; and
an imbalance fee prediction unit configured to calculate a future imbalance fee prediction value,
wherein the plan creation unit creates an electric power generation plan or an electric power sales plan, based on the electric power generation amount prediction value, the calculated electric power trading price prediction value, and the calculated imbalance fee prediction value.

10. The electric power plan creation system according to claim 1,
wherein the plan modification unit is configured to acquire information on the latest electric power generation plan and/or the latest electric power sales plan that the plan creation unit has created.

11. The electric power plan creation system according to claim 1, further comprising
a modification input unit configured to accept an input for modifying the electric power generation plan and/or the electric power sales plan, wherein the modification input unit is used in place of the plan modification unit.

12. The electric power plan creation system according to claim 1 or 10,
wherein the plan modification unit and the modification input unit are prohibited from modifying the electric power generation plan and/or the electric power sales plan after a gate-closure.

13. The electric power plan creation system according to claim 1,
wherein the plan creation unit creates the electric power generation plan, in accordance with plan creation and submission rules pre-set for each target electric power generation facility.

14. The electric power plan creation system according to claim 1, further comprising:
a display data generation unit configured to create display data, based on the electric power generation plan and/or the electric power sales plan, the display data being configured to:
divide and display the electric power generation plan and/or the electric power sales plan for each pre-set date and time;
indicate whether modification of the electric power generation plan and/or the electric power sales plan is permitted or prohibited, at least in accordance with a gate-closure time, and
for the divided electric power generation plan and/or the divided electric power sales plan, display which of the plan modification unit and the modification input unit is enabled.
